# EUROPÄISCHE PATENTSCHRIFT

(11) **EP 3 733 530 B1**
(45) Veröffentlichungstag und Bekanntmachung des Hinweises auf die Patenterteilung: **24.11.2021**
(21) Anmeldenummer: 20163967.1
(22) Anmeldetag: 18.03.2020
(51) Int. Cl.: B65B 7/16, B65B 31/02, B65B 31/04, B65B 43/46, B65B 59/04, B65B 57/04

(54) **SCHALENVERSCHLIESSMASCHINE SOWIE VERFAHREN ZUM BETREIBEN EINER GREIFEREINRICHTUNG AN DER SCHALENVERSCHLIESSMASCHINE**
CLOSING MACHINE AND METHOD FOR OPERATING A GRIPPER DEVICE ON SAME
OPERCULEUSE DE BARQUETTES AINSI QUE PROCÉDÉ DE FONCTIONNEMENT D'UN DISPOSITIF PRÉHENSEUR SUR L'OPERCULEUSE DE BARQUETTES

(30) Priorität: 03.05.2019 DE 102019206345
(43) Veröffentlichungstag der Anmeldung: 04.11.2020
(73) Patentinhaber: MULTIVAC Sepp Haggenmüller SE & Co. KG, 87787 Wolfertschwenden (DE)
(72) Erfinder: GABLER, Albert, 87760 Lachen-Albishofen (DE); BUCHBERGER, Peter, 87448 Waltenhofen (DE)
(74) Vertreter: Grünecker Patent- und Rechtsanwälte PartG mbB

(56) Entgegenhaltungen:
- EP-A2- 2 241 862
- GB-A- 2 551 414
- US-A1- 2011 072 764

## Beschreibung

Die vorliegende Erfindung betrifft eine Schalenverschließmaschine gemäß dem Anspruch 1 sowie ein Verfahren zum Betreiben einer Greifereinrichtung an einer Schalenverschließmaschine gemäß dem unabhängigen Verfahrensanspruch 11.

GB 25 171 45 B offenbart eine Schalenverschließmaschine, die in der Praxis auch Traysealer genannt wird, mit einer Greifereinrichtung, die von einem Zuführband Schalen (im Folgenden auch Trays bezeichnet) abholt und einer Siegelstation für einen darin stattfindenden Schalenschließvorgang zuführt. Nach dem Schalenschließvorgang werden die versiegelten Verpackungen aus der Siegelstation mittels der Greifereinrichtung auf ein Abführband transportiert. Die Greifereinrichtung weist eine erste Greifereinheit für den Transport der Trays in die Siegelstation und eine daran gekoppelte zweite Greifereinheit für den Transport der versiegelten Verpackungen aus der Siegelstation heraus hin zum Abführband auf. Die erste Greifereinheit besitzt Greiferfinger, die kürzer ausgebildet sind als Greiferfinger, die an der zweiten Greifereinheit ausgebildet sind. Hiermit wird erreicht, dass mittels der verlängerten Greiferfinger der zweiten Greifereinheit stillstehende, versiegelte Verpackungen innerhalb der Siegelstation vorab ergriffen werden können, also bevor die in der Produktionsrichtung vorangestellte erste Greifereinheit die auf dem Zuführband bereitgestellten Trays aufnimmt. In anderen Worten findet hier eine Eintauchbewegung der Greiferfinger der zweiten Greifereinheit in zwischen den Verpackungen freigelassene Lücken zeitlich vor einer Eintauchbewegung der Greiferfinger der ersten Greifereinheit in zwischen den Trays freigelassene Lücken statt.

Nachteilig bei der oben beschriebenen Vorgehensweise ist jedoch, dass der quer zur Produktionsrichtung zum Schließen und Öffnen der Greifereinrichtung arbeitende Hub wegen der verlängerten Greiferfinger der zweiten Greifereinheit eine vergleichsweise lange Hubwegstrecke benötigt. Demzufolge fällt auch die Hubbewegungszeit pro Transportzyklus länger aus, was produktivitätsmindernd sein kann.

Aufgabe der Erfindung ist es, insbesondere vor dem Hintergrund der oben beschriebenen bekannten Lösung eine Schalenverschließmaschine sowie ein Verfahren zum Betreiben einer Greifereinrichtung an einer Schalenverschließmaschine zur Verfügung zu stellen, womit sich die Produktivität der Schalenverschließmaschine steigern lässt und dennoch ein präziser Schalentransport gewährleistet wird.

Diese Aufgabe wird gelöst mittels einer Schalenverschließmaschine gemäß dem Anspruch 1 sowie mittels eines Verfahrens zum Betreiben einer Greifereinrichtung an einer Schalenverschließmaschine gemäß dem unabhängigen Verfahrensanspruch 11.

Vorteilhafte Weiterbildungen der Erfindung sind in den jeweiligen Unteransprüchen angegeben.

Die Erfindung bezieht sich auf eine Schalenverschließmaschine, die mindestens eine Zuführeinheit zum Transport von Trays in einer Produktionsrichtung, eine in der Produktionsrichtung der Zuführeinheit nachgelagerte Siegelstation zum Herstellen von Verpackungen, mindestens eine der Siegelstation in der Produktionsrichtung nachgelagerte Abführeinheit sowie eine Greifereinrichtung umfasst. Die Greifereinrichtung ist dazu ausgebildet, in einem Transportzyklus an der Zuführeinheit bereitgestellte Trays aufzunehmen und in die Siegelstation für einen darin stattfindenden Schalenschließvorgang zu transportieren sowie innerhalb der Siegelstation hergestellte Verpackungen aufzunehmen und zur Abführeinheit zu transportieren.

Die Greifereinrichtung weist eine erste Greifereinheit mit einem ersten und einem zweiten Schalengreifer auf, wobei der erste und der zweite Schalengreifer synchron zueinander entlang geschlossener Bahnkurven periodisch verstellbar gelagert sind, und wobei der erste und der zweite Schalengreifer dazu ausgebildet sind, zur Aufnahme der mittels der Zuführeinheit bereitgestellten Trays eine Schließbewegung (im Folgenden auch Eintauchbewegung bezeichnet) durchzuführen. Der erste und der zweite Schalengreifer sind jeweils beim Durchführen der Schließbewegung von einer jeweiligen Ausgangsposition hin zu einer jeweiligen Schließposition verstellbar, wobei der erste und der zweite Schalengreifer während der Schließbewegung zumindest entlang eines vorbestimmten Bewegungsabschnitts bis zum Erreichen der Schließposition mittels einer sowohl in der Produktionsrichtung als auch quer zur Produktionsrichtung überlagerten Bewegung aufeinander zu verstellbar sind, um die an der Zuführeinheit bereitgestellten Trays aufzunehmen, wobei die auf einem Transportband der Zuführeinheit bereitgestellten Trays in der Produktionsrichtung hintereinander in einem vorbestimmten Abstand zueinander, der ein jeweiliges Positionsfenster zwischen den Trays definiert, angeordnet sind.

Kennzeichnend für die Erfindung ist, dass die erste Greifereinheit dazu ausgebildet ist, dass eine Geschwindigkeit in der Produktionsrichtung des ersten und des zweiten Schalengreifers jeweils beim Durchführen der Schließbewegung von der jeweiligen Ausgangsposition hin zu der jeweiligen Schließposition derart beschleunigbar ist, dass die Geschwindigkeit des ersten und des zweiten Schalengreifers in der Produktionsrichtung relativ zu einer Bandlaufgeschwindigkeit der Zuführeinheit, die größer als Null ist, während eines vorbestimmten ersten Zeitintervalls des vorbestimmten Bewegungsabschnitts kleiner als die Bandlaufgeschwindigkeit und während eines daran anschließenden, vorbestimmten zweiten Zeitintervalls bis zum Erreichen der Schließposition größer als die Bandlaufgeschwindigkeit ist, so dass an dem ersten und dem zweiten Schalengreifer ausgebildete Greiferfinger in die jeweiligen zwischen den bereitgestellten Trays befindlichen Positionsfenster jeweils entlang einem vorbestimmten Bahnkurvenabschnitt, der sich beispielsweise parabolisch in Produktionsrichtung öffnet, eintauchen.

Bei der Erfindung betrifft die Schließbewegung, insbesondere der dazugehörige vorbestimmte Bahnkurvenabschnitt, primär eine Eintauchbewegung der an der ersten Greifereinheit ausgebildeten Greiferfinger in die zwischen den auf dem Transportband der Zuführeinheit bereitgestellten Trays freigelassenen Positionsfenster. Die erste Greifereinheit kann vor dem Durchführen der Eintauchbewegung bereits gemäß einem vorausgehenden Anfahrabschnitt der Schließbewegung, beispielsweise von einer Startposition bis hin zur Ausgangsposition der Schalengreifer, bis auf ein vorbestimmtes Maß geschlossenen worden sein, um die jeweiligen Schalengreifer an die Trays herangerückt, insbesondere in deren jeweiligen Ausgangspositionen, für die anschließende Schließbewegung zum Eintauchen der Greiferfinger in die Positionsfenster zu positionieren. Die der Eintauchbewegung vorangestellt durchführbare Anfahrbewegung der Schalengreifer kann ausschließlich quer zur Produktionsrichtung oder mit einer überlagerten Bewegung in und quer zur Produktionsrichtung stattfinden. Vorstellbar wäre es auch, dass der Anfahrabschnitt eine Bewegungskomponente aufweist, die entgegen der Produktionsrichtung ausgerichtet ist.

Insbesondere kann als jeweilige Ausgangsposition für den Eintauchvorgang ein vorderer Bereich der Positionsfenster, d.h. in Produktionsrichtung an hinteren Trayecken, gewählt sein, um die jeweiligen Greiferfinger für die Schließbewegung, d.h. deren Eintauchvorgang, zu positionieren. Damit können die jeweiligen Greiferfinger der ersten Greifereinheit in die für deren Eintauchbewegung zur Verfügung gestellten Positionsfenster, die zwischen den Trays an der Zuführeinheit vorliegen, zunächst an einem in der Produktionsrichtung vorderen Bereich der jeweiligen Positionsfenster eintauchen und vorsichtig, mit einer langsameren Relativgeschwindigkeit zum Transportband entlang dem vorbestimmten Bahnkurvenabschnitt in die Positionsfenster bis zum Erreichen einer vorbestimmten Eintauchtiefe, an welcher die Greiferfinger bereits in die Positionsfenster hineinragen, hineinverfahren. Da die Geschwindigkeit des Transportbands der Zuführeinheit zu Beginn der Eintauchbewegung der ersten Greifereinheit größer ist als die Geschwindigkeit der jeweiligen Schalengreifer in der Produktionsrichtung, ziehen die bereitgestellten Trays auf dem Transportband der Zuführeinheit, insbesondere die dazwischen freigelassenen Positionsfenster, in welche die Greiferfinger eintauchen sollen, am ersten und zweiten Schalengreifer zunächst derart vorbei, dass zu Beginn der Eintauchbewegung in relativer Betrachtungsweise die Greiferfinger ausgehend von deren Ausgangspositionen in die freigelassenen Positionsfenster rücklaufend und langsam eintauchen können, ehe eine ausreichend tiefe Lage (die o.g. vorbestimmte Eintauchtiefe) der Greiferfinger zwischen den Trays erreicht ist. Ab diesem Zeitpunkt können die Schalengreifer über einen Betrag der Transportbandgeschwindigkeit hinaus beschleunigt werden, um die Trays sanft und zügig in der Produktionsrichtung mitzunehmen. Eine sanfte Aufnahme kann dadurch unterstützt werden, indem die Schalengreifer die Trays mit der Transportbandgeschwindigkeit aufnehmen.

Die bei der Erfindung durchgeführte Schließbewegung bewirkt somit, dass die auf dem Transportband der Zuführeinheit mit einer Bandlaufgeschwindigkeit herantransportierten Trays im Bewegungsfluss vorsichtig und präzise aufgenommen und mit einer schnellen und dennoch sanften Mitnahme in Produktionsrichtung in die nachgelagerte Siegelstation weitertransportiert werden können.

Der bei der zum Eintauchen der Greiferfinger bei deren Schließbewegung vorgesehene Bahnkurvenabschnitt kann einen ersten Steigungsabschnitt umfassen, der von der Ausgangsposition der Greiferfinger bis hin zu einer vorbestimmten Eintauchtiefe der Greiferfinger in die Positionsfenster hinein negativ ist und einen am ersten Steigungsabschnitt anschließenden zweiten Steigungsabschnitt bis zur Schließposition umfassen, der positiv ist. Der Bahnkurvenabschnitt kann im Wesentlichen eine Parabelform aufweisen, die sich in Produktionsrichtung öffnet.

Vorzugsweise sind beim Durchführen der Schließbewegung zur Aufnahme der Trays mittels der ersten Greifereinheit eine Bewegung des ersten und des zweiten daran ausgebildeten Schalengreifers in der Produktionsrichtung als auch quer zur Produktionsrichtung sowie eine Vorschubbewegung des Transportbands der Zuführeinheit kontinuierlich beim Eintauchen der Greiferfinger in die Positionsfenster überlagert. Im Prinzip können die jeweiligen Bewegungen der beiden Schalengreifer in und quer zur Produktionsrichtung sowie die Bewegung des Transportbands der Zuführeinheit steuerungstechnisch derart aufeinander abgestimmt werden, dass das Eintauchen der Greiferfinger ausgehend von deren Ausgangsposition beim Durchführen der Schließbewegung vorsichtig bis zu einer vorbestimmten Eintauchtiefe präzise koordinierbar ist und anschließend durch eine Beschleunigung der Schalengreifer über das Geschwindigkeitsniveau des Transportbands hinaus eine zügige, jedoch sanft durchführbare Mitnahmebewegung für den Transport der Trays in die Siegelstation einhergeht. Steuerungstechnisch kann dafür eine gesondert für die Greifereinrichtung an der Schalenverschließmaschine vorgesehene Steuereinrichtung und/oder eine zentrale Steuereinrichtung der Schalenverschließmaschine zum Einsatz kommen.

Eine vorteilhafte Ausführungsform der Erfindung sieht vor, dass die jeweiligen Greiferfinger bei der Durchführung der Schließbewegung zumindest während des ersten Zeitintervalls kontaktlos zu den Trays entlang der jeweiligen Bahnkurvenabschnitte innerhalb eines Bereichs der jeweiligen Positionsfenster verstellbar sind. Durch die überlagerten Bewegungen können die Greiferfinger der ersten Greifereinheit zumindest während des ersten Zeitintervalls der Eintauchbewegung innerhalb der Positionsfenster gegenläufig zu den Trays, weil die Positionsfenster zunächst schneller als die Schalengreifer in der Produktionsrichtung verstellt werden, in die jeweiligen Positionsfenster eintauchen, wobei der Traytransport kontinuierlich weiterlaufen kann.

Vorteilhaft ist es, wenn die jeweilige Ausgangsposition des ersten und des zweiten Schalengreifers derart festgelegt ist, dass jeweilige Spitzen gegenüberstehender Greiferfinger an in der Produktionsrichtung hintere Trayecken eines Trays herangerückt sowie in der Produktionsrichtung vorne am anschließenden Positionsfenster positioniert sind, ehe die Schließ- bzw. Eintauchbewegung beginnt. Relativ zu den Trays können die Greiferfinger von den hinteren Trayecken aus vorsichtig sowie mit einer gegenläufig zur schnelleren Traybewegung maximalen Eintauchstrecke in die jeweiligen Positionsfenster eintauchen.

Vorzugsweise weist die Greifereinrichtung eine in der Produktionsrichtung der ersten Greifereinheit nachgeordnete zweite Greifereinheit mit einem dritten und einem vierten Schalengreifer auf, wobei der dritte und der vierte Schalengreifer synchron zueinander entlang geschlossener Bahnkurven periodisch verstellbar gelagert sind, wobei der dritte und der vierte Schalengreifer der zweiten Greifereinheit dazu ausgebildet sind, zur Aufnahme der in der Siegelstation hergestellten Verpackungen eine Schließbewegung durchzuführen, wobei der dritte und der vierte Schalengreifer jeweils beim Durchführen der Schließbewegung von einer jeweiligen Ausgangsposition hin zu einer jeweiligen Schließposition verstellbar sind. Mittels der zweiten Greifereinheit ist es möglich, die innerhalb der Siegelstation fertig hergestellten, versiegelten Verpackungen aufzunehmen und an die der Siegelstation nachgelagerte Abführeinheit zu übergeben. Bei der Schließbewegung handelt es sich auch hier um eine Eintauchbewegung von an der dritten und vierten Greifereinheit ausgebildeten Greiferfinger in jeweiligen Lücken zwischen den Verpackungen in der Siegelstation.

Eine vorteilhaftere Variante sieht vor, dass die erste und die zweite Greifereinheit aneinandergekoppelt ausgebildet sind, so dass die jeweiligen Schalengreifer auf gemeinsamen Bahnkurven verstellbar sind. Mittels einer derartigen integralen Lösung für die Greifereinrichtung lässt sich der steuerungs- und/oder regelungstechnische Aufwand an der Schalenverschließmaschine reduzieren.

Alternativ kann es vorteilhaft sein, wenn die erste und die zweite Greifereinheit als separate Greifereinheiten ausgebildet sind. Hier ließen sich sowohl der Betrieb als auch die konstruktive Ausführung der beiden Greifereinheiten unabhängiger voneinander gestalten.

Gemäß einer Variante, sind jeweilige an der ersten und der zweiten Greifereinheit vorgesehene Greiferfinger zum Ergreifen der Trays bzw. Verpackungen quer zur Produktionsrichtung gleich lang ausgebildet.

Eine besondere Ausführungsform sieht vor, dass der dritte und der vierte Schalengreifer der zweiten Greifereinheit, insbesondere wenn separate Greifereinheiten vorliegen, dazu ausgebildet sind, zur Freigabe hergestellter Verpackungen an die Abführeinheit eine Freigabebewegung durchzuführen, wobei der dritte und der vierte Schalengreifer zumindest entlang eines Bewegungsabschnitts während der Freigabebewegung mittels einer sowohl in der Produktionsrichtung als auch entgegengesetzt quer zur Produktionsrichtung überlagerten Bewegung verstellbar sind, um die Verpackungen für einen Weitertransport an ein in der Produktionsrichtung laufendes Transportband der Abführeinheit freizugeben. Dadurch lassen sich Stillstandzeiten des Transportbands der Abführeinheit reduzieren.

Vorzugsweise sind beim Durchführen der Freigabebewegung der dritte und der vierte Schalengreifer der zweiten Greifereinheit jeweils mit einer Bewegungskomponente in der Produktionsrichtung verstellbar, die zu einer Bewegungskomponente der mittels der Abführeinheit in der Produktionsrichtung abtransportierten Verpackungen synchronisiert sind. Dadurch lassen sich jeweilige Greiferfinger der zweiten Greifereinheit vorsichtig aus einem Eingriffsbereich zwischen den hergestellten Verpackungen herausfahren, sodass die hergestellten Verpackungen positionsgenau an das Transportband der Abführeinheit übergebbar sind. Damit lässt sich eine weitere Bearbeitung, beispielsweise eine Etikettierung, der hergestellten Verpackungen besser durchführen.

Eine vorteilhafte Ausführungsvariante der Erfindung sieht vor, dass die erste Greifereinheit dazu ausgebildet ist, eine Rücklaufbewegung zur jeweiligen Startposition der Schließbewegung und/oder zur Ausgangsposition der Eintauchbewegung durchzuführen, wobei der jeweilige erste und der jeweilige zweite Schalengreifer während der Rücklaufbewegung zumindest entlang eines Bewegungsabschnitts bis zum Erreichen der Start- und/oder Ausgangsposition mittels einer sowohl entgegengesetzt zur Produktionsrichtung als auch quer zur Produktionsrichtung überlagerten Bewegung aufeinander zu verstellbar sind. Dadurch wird erreicht, dass die jeweiligen Schalengreifer der ersten Greifereinheit vergleichsweise zügig von der Siegelstation zurück in deren Start- und/oder Ausgangsposition verstellt werden können, um von dieser Position ausgehend erneut für eine Schließbewegung zum Ergreifen von auf dem Transportband der Zuführeinheit bereitgestellten Trays zur Verfügung zu stehen.

Die Erfindung bezieht sich auch auf ein Verfahren zum Betreiben einer Greifereinrichtung an einer Schalenverschließmaschine.

Bei dem erfindungsgemäßen Verfahren werden mittels einer ersten Greifereinheit Trays von einer Zuführeinheit aufgenommen und für einen Schalenschließvorgang in eine Siegelstation transportiert. Zur Aufnahme der mittels der Zuführeinheit bereitgestellten Trays führen ein erster und ein zweiter Schalengreifer der ersten Greifereinheit eine Schließbewegung durch, anhand welcher die Schalengreifer von einer jeweiligen Ausgangsposition hin zu einer jeweiligen Schließposition verstellt werden, wobei der erste und der zweite Schalengreifer während der Schließbewegung zumindest entlang eines vorbestimmten Bewegungsabschnitts bis zum Erreichen der Schließposition mittels einer sowohl in der Produktionsrichtung als auch quer zur Produktionsrichtung überlagerten Bewegung aufeinander zu verstellt werden, um die an der Zuführeinheit bereitgestellten Trays aufzunehmen. Die Trays werden auf einem Transportband der Zuführeinheit in der Produktionsrichtung hintereinander in einem vorbestimmten Abstand zueinander, der ein jeweiliges Positionsfenster zwischen den Trays definiert, bereitgestellt.

Kennzeichnend für das erfindungsgemäße Verfahren ist, dass eine Geschwindigkeit in der Produktionsrichtung des ersten und des zweiten Schalengreifers jeweils beim Durchführen der Schließbewegung, d.h. bei einer Eintauchbewegung daran ausgebildeter Greiferfinger zwischen die Trays, von der jeweiligen Ausgangsposition hin zu der jeweiligen Schließposition derart beschleunigt wird, dass die Geschwindigkeit des ersten und des zweiten Schalengreifers in der Produktionsrichtung relativ zu einer Bandlaufgeschwindigkeit der Zuführeinheit, die größer als Null ist, während eines vorbestimmten ersten Zeitintervalls des vorbestimmten Bewegungsabschnitts kleiner als die Bandlaufgeschwindigkeit und während eines daran anschließenden, vorbestimmten zweiten Zeitintervalls bis zum Erreichen der Schließposition größer als die Bandlaufgeschwindigkeit ist. Damit können an dem ersten und dem zweiten Schalengreifer ausgebildete Greiferfinger ausgehend von deren jeweiliger Ausgangsposition eine Eintauchbewegung in die jeweiligen zwischen den bereitgestellten Trays befindlichen Positionsfenster jeweils entlang einem in der Produktionsrichtung vorbestimmten Bahnkurvenabschnitt durchführen.

Erfindungsgemäß wird das an der Zuführeinheit eingesetzte Transportband daher bei der Schließbewegung, insbesondere zu Beginn der Eintauchbewegung der jeweiligen Schalengreifer, schneller bewegt als die jeweiligen Schalengreifer in Produktionsrichtung. Dies hat zur Folge, dass die zwischen den jeweiligen Trays freigelassenen Positionsfenster für eine vorbestimmte Zeit an jeweiligen sich quer und in Produktionsrichtung bewegenden Greiferfingern der beiden Schalengreifer vorbeiziehen und der überlagerte Bewegungsablauf der Schalengreifer mit der Bandlaufgeschwindigkeit derart abgestimmt werden kann, dass die Greiferfinger ausgehend von deren Ausgangspositionen in die zwischen den Trays freigelassenen Positionsfenster kontaktlos innerhalb der Positionsfenster gegenläufig zur Produktionsrichtung eintauchen, was bis zu einem Zeitpunkt erfolgt, zu dem die Greiferfinger ausreichend tief in den jeweiligen Positionsfenstern eingetaucht sind. Mit Erreichen einer ausreichenden Eintauchtiefe lassen sich die Schalengreifer in Produktionsrichtung weiter beschleunigen, um mit einem Geschwindigkeitsniveau oberhalb dem der Bandlaufgeschwindigkeit fortbewegt zu werden, wodurch die Trays vom Transportband der Zuführeinheit in Produktionsrichtung zur Siegelstation mitgenommen werden können.

Vorzugsweise tauchen die jeweiligen Greiferfinger der ersten Greifereinheit in die für deren Eintauchbewegung zur Verfügung gestellten Positionsfenster, die zwischen den Trays an der Zuführeinheit vorliegen, zunächst an einem in der Produktionsrichtung vorderen Bereich der jeweiligen Positionsfenster neben hinteren Trayecken ein, und bewegen sich gegenläufig und vorsichtig, mit einer langsameren Relativgeschwindigkeit zum Transportband entlang dem vorbestimmten Bahnkurvenabschnitt in die Positionsfenster bis zum Erreichen einer vorbestimmten Eintauchtiefe fort. Da die Geschwindigkeit des Transportbands der Zuführeinheit zu Beginn der Eintauchbewegung der ersten Greifereinheit größer ist als die Geschwindigkeit der jeweiligen Schalengreifer in der Produktionsrichtung, ziehen die bereitgestellten Trays auf dem Transportband der Zuführeinheit, insbesondere die dazwischen freigelassenen Positionsfenster, in welche die Greiferfinger eintauchen sollen, am ersten und zweiten Schalengreifer zunächst derart vorbei, dass in relativer Betrachtungsweise die Greiferfinger ausgehend von deren Ausgangspositionen in die freigelassenen Positionsfenster rücklaufend und langsam eintauchen, ehe diese eine ausreichend tiefe Lage (die o.g. vorbestimmte Eintauchtiefe) innerhalb der Positionsfenster zwischen den Trays erreichen. Ab diesem Zeitpunkt können die Schalengreifer über einen Betrag der Transportbandgeschwindigkeit hinaus beschleunigt werden, um die Trays sanft und zügig in der Produktionsrichtung mitzunehmen. Eine sanfte Aufnahme kann dadurch unterstützt werden, indem die Schalengreifer die Trays mit der Transportbandgeschwindigkeit aufnehmen.

Vorteilhaft ist, wenn beim Durchführen der Schließbewegung zur Aufnahme der Trays mittels der ersten Greifereinheit eine Bewegung des ersten und des zweiten Schalengreifers in der Produktionsrichtung als auch quer zur Produktionsrichtung sowie eine Vorschubbewegung des Transportbands der Zuführeinheit kontinuierlich überlagert sind. Die Trays lassen sich dadurch besonders präzise und sanft von der ersten Greifereinheit aufnehmen und können für einen anschließenden Schalenschließvorgang in die Siegelstation transportiert werden.

Vorzugsweise nimmt in der Produktionsrichtung eine der ersten Greifereinheit nachgeordnete zweite Greifereinheit in der Siegelstation hergestellte Verpackungen auf und übergibt diese an eine in der Produktionsrichtung der Siegelstation nachgelagerte Abführeinheit, wobei ein dritter und ein vierter Schalengreifer der zweiten Greifereinheit eine Schließbewegung zur Aufnahme der in der Siegelstation hergestellten Verpackungen durchführen, und wobei der dritte und der vierte Schalengreifer jeweils beim Durchführen der Schließbewegung von einer jeweiligen Ausgangsposition hin zu einer jeweiligen Schließposition verstellt werden. Die erste und die zweite Greifereinheit können hervorragend für einen automatisierten Betrieb der Schalenverschließmaschine eingesetzt werden.

Eine besonders kompakte sowie in steuerungs- und/oder regelungstechnischer Hinsicht vorteilhafte Lösung sieht vor, dass die erste und die zweite Greifereinheit aneinander gekoppelt die jeweiligen Schließbewegungen durchführen, so dass der dritte und der vierte Schalengreifer während der Schließbewegung der zweiten Greifereinheit zumindest entlang eines Bewegungsabschnitts bis zum Erreichen der Schließposition mittels einer sowohl in der Produktionsrichtung als auch quer zur Produktionsrichtung überlagerten Bewegung aufeinander zu verstellt werden, um die in der Siegelstation bereitgestellten Verpackungen aufzunehmen.

Vorzugsweise sind der dritte und der vierte Schalengreifer derart konfiguriert, dass die innerhalb der Siegelstation bereitgestellten Verpackungen ihre jeweiligen eingenommenen Positionen, an welchen diese zur Abholung positioniert sind, beibehalten bis der dritte und der vierte Schalengreifer in der jeweiligen Schließposition angekommen sind.

Vorzugsweise führen der dritte und der vierte Schalengreifer der zweiten Greifereinheit für eine Freigabe hergestellter Verpackungen an die Abführeinheit eine Freigabebewegung durch, wobei der dritte und der vierte Schalengreifer zumindest entlang eines Bewegungsabschnitts während der Freigabebewegung mittels einer sowohl in der Produktionsrichtung als auch entgegengesetzt quer zur Produktionsrichtung überlagerten Bewegung verstellt werden, um die Verpackungen für einen Weitertransport an ein in der Produktionsrichtung laufendes Transportband der Abführeinheit zu übergeben. Dadurch lassen sich Stillstandzeiten des zur Abführeinheit gehörigen Transportbands reduzieren, so dass der Produktionsfluss insgesamt kontinuierlicher ablaufen kann.

Vorzugsweise werden beim Durchführen der Freigabebewegung der dritte und der vierte Schalengreifer der zweiten Greifereinheit jeweils mit einer Bewegungskomponente in der Produktionsrichtung verstellt, die zu einer Bewegungskomponente der mittels der Abführeinheit in der Produktionsrichtung abtransportierten Verpackungen synchronisiert wird. Dadurch lassen sich die an den jeweiligen Schalengreifern der zweiten Greifereinheit ausgebildeten Greiferfinger derart vorsichtig aus einem Eingriffsbereich zwischen den hergestellten Verpackungen herausfahren, dass die Verpackungen präzise in vorbestimmten Abständen an das Transportband der Abführeinheit übergebbar sind. Eine weitere Bearbeitung sowie ein Weitertransport der so abgegebenen Verpackungen ist dadurch besser durchführbar.

Das erfindungsgemäße Prinzip lässt sich auch hervorragend an einer mehrspurigen Schalenverschließmaschine einsetzen. Die bei der Erfindung eingesetzte Greifereinrichtung ließe sich dann anhand mehrerer parallel arbeitender Schalengreifereinheiten realisieren, um gemäß einem Maschinentakt oder gegebenenfalls zeitlich versetzt Trays von in Produktionsrichtung parallel zueinander angeordneten Zuführeinheiten zyklisch aufzunehmen und in jeweilige nachgelagerte Siegelstationen zu transportieren.

Ausführungsbeispiele der Erfindung werden anhand den folgenden Figuren erläutert. Es zeigen:
- Figur 1: eine Verpackungsmaschine, die in Form einer Schalenverschließmaschine vorliegt,

- Figuren 2a bis 2f: eine Ausführungsvariante der Erfindung mit einer integralen Greifereinrichtung,
- Figur 2g: ein schematischer Bewegungsablauf der Ausführungsvariante gemäß den Figuren 2a bis 2f,
- Figuren 3a bis 3i: eine Ausführungsvariante mit separaten Greifereinheiten,
- Figur 3j: ein schematischer Bewegungsablauf der Greifereinheiten aus den Figuren 3a bis 3i,
- Figuren 4a bis 4h: eine andere Ausführungsvariante mit separaten Greifereinheiten,
- Figur 4i: ein schematischer Bewegungsablauf der Ausführungsvariante gemäß den Figuren 4a bis 4h,
- Figur 5: eine schematische Darstellung jeweiliger Geschwindigkeitsverläufe der Schalengreifer quer zur Produktionsrichtung sowie der Schalengreifer der ersten Greifereinheit und des Transportbands der Zuführeinheit in Produktionsrichtung,
- Figur 6a: eine schematische Darstellung des Eintauchbahnkurvenabschnitts von Greiferfingerspitzen der ersten Greifereinheit in die Positionsfenster zwischen die auf der Zuführeinheit bereitgestellten Trays, und
- Figur 6b: das Eintauchen von Greiferfingerspitzen der zweiten Greifereinheit innerhalb der Siegelstation in die Positionsfenster zwischen den stillstehenden Verpackungen.

Technische Merkmale sind in den Figuren durchgehend mit den gleichen Bezugszeichen versehen.

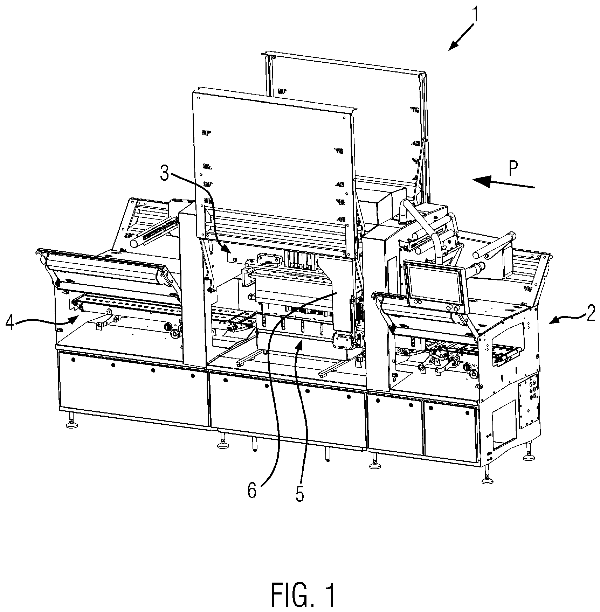

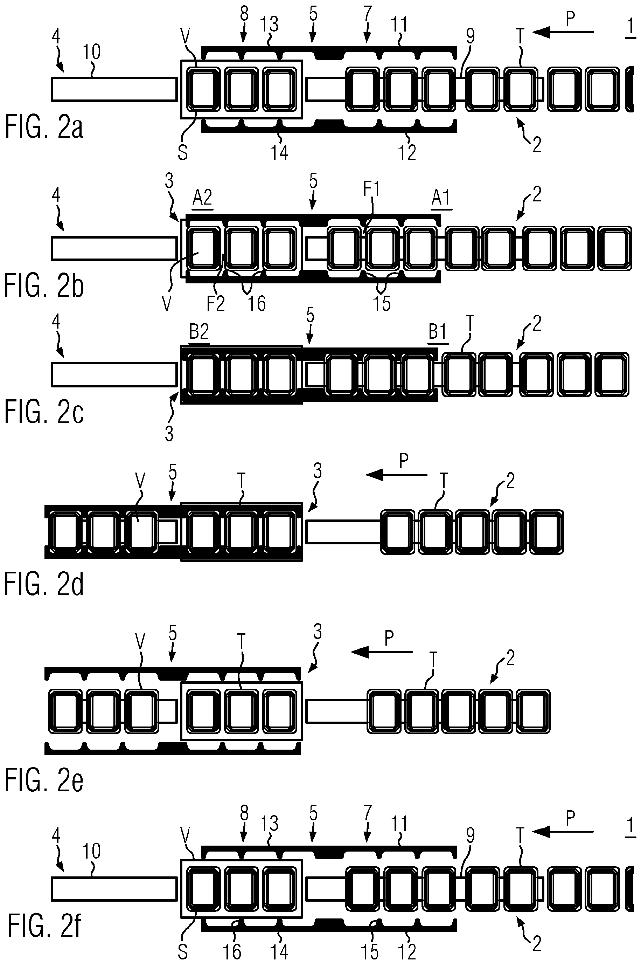

Figur 1 zeigt eine Schalenverschließmaschine 1. Die Schalenverschließmaschine 1 ist als sogenannter Traysealer ausgebildet. Die Schalenverschließmaschine 1 umfasst eine Zuführeinheit 2 zum Transport von Trays T in einer Produktionsrichtung P, wobei die Trays T beispielsweise in Figur 2a gezeigt werden. In der Produktionsrichtung P ist der Zuführeinheit 2 eine Siegelstation 3 zum Herstellen von Verpackungen V nachgelagert. Die Verpackungen V werden durch einen Schalenschließvorgang S gemäß Figur 2a innerhalb der Siegelstation 3 hergestellt.

Ferner zeigt Figur 1 eine der Siegelstation 3 in der Produktionsrichtung P nachgeordnete Abführeinheit 4 zum Abtransport hergestellter Verpackungen V. Die Schalenverschließmaschine 1 aus Figur 1 besitzt des Weiteren eine Greifereinrichtung 5, die dazu ausgebildet ist, in einem Transportzyklus an der Zuführeinheit 2 bereitgestellte Trays T aufzunehmen und in die Siegelstation 3 für den darin stattfindenden Schalenschließvorgang S zu transportieren. Außerdem ist die Greifereinrichtung 5 dazu konfiguriert, innerhalb der Siegelstation 3 hergestellte Verpackungen V aufzunehmen und zur Abführeinheit 4 zu transportieren. Die Greifereinrichtung 5 besitzt beidseitig der Siegelstation 3 einen Greiferarm 6 sowie an den Greiferarmen 6 befestigte Schalengreiferpaare zur Aufnahme und zum Transport der Trays T sowie der Verpackungen V. Die Schalengreiferpaare werden in Zusammenhang mit den folgenden Figuren genauer erläutert.

Die Figuren 2a bis 2f zeigen in schematischer Darstellung einen Betriebsablauf einer Greifereinrichtung 5 an der Schalenverschließmaschine 1 aus Figur 1.

Gemäß Figur 2a weist die Greifereinrichtung 5 eine erste Greifereinheit 7 und eine zweite Greifereinheit 8 auf, die aneinandergekoppelt ausgebildet sind. Die erste Greifereinheit 7 ist dazu ausgebildet, Trays T von einem Transportband 9 der Zuführeinheit 2 abzuholen und für den Schalenschließvorgang S in die Siegelstation 3 zu transportieren. Die zweite Greifereinheit 8 ist dazu ausgebildet, die innerhalb der Siegelstation 3 fertig hergestellten, versiegelten Verpackungen V aufzunehmen und an ein in Produktionsrichtung P der Siegelstation 3 nachgelagertes Transportband 10 der Abführeinheit 4 abzugeben. Wie in den folgenden Figuren 2b bis 2f dargestellt wird, werden durch den Transport von Trays T mittels der Greifereinrichtung 5 in die Siegelstation 3 gleichzeitig versiegelte Verpackungen V aus der Siegelstation 3 zu der Abführeinheit 4 transportiert.

Figur 2a zeigt auch, dass die erste Greifereinheit 7 einen ersten Schalengreifer 11 und einen zweiten Schalengreifer 12 aufweist. Die zweite Greifereinheit 8 verfügt über einen dritten Schalengreifer 13 und einen vierten Schalengreifer 14. Der erste und der zweite Schalengreifer 11, 12 bilden ein Schalengreiferpaar zum Transport der Trays T und der dritte und vierte Schalengreifer 13, 14 bilden ein weiteres Schalengreiferpaar zum Transport der versiegelten Verpackungen V aus.

Im Vergleich zur Figur 2a sind in der Figur 2b die jeweiligen Schalengreiferpaare näher zusammengerückt dargestellt. Zwischen den auf dem Transportband 9 der Zuführeinheit 2 bereitgestellten Trays T sind Positionsfenster F1 freigelassenen. An der ersten Greifereinheit 7 ausgebildete Greiferfinger 15 sind unmittelbar neben den Positionsfenstern F1 positioniert.

Figur 2b zeigt auch, dass an der zweiten Greifereinheit 8 ausgebildete Greiferfinger 16 innerhalb der Siegelstation 3 unmittelbar neben Positionsfenstern F2, die zwischen den fertiggesiegelten Verpackungen V vorliegen, positioniert sind.

In der Figur 2b sind die erste und die zweite Greifereinheit 7, 8jeweils derart positioniert, dass die daran ausgebildeten Schalengreiferpaare in einer jeweiligen Ausgangsposition A1, A2 in Bezug auf die Trays T an der Zuführeinheit 2 sowie in Bezug auf die Verpackungen V innerhalb der Siegelstation 3 gelagert sind.

Figur 2c zeigt die erste Greifereinheit 7 sowie die zweite Greifereinheit 8 in jeweiligen Schließpositionen B1, B2. Die jeweiligen Greiferfinger 15, 16 der ersten und der zweiten Greifereinheit 7, 8 sind in Figur 2c in die jeweiligen Positionsfenster F1, F2 eingetaucht dargestellt. Die Trays T sowie die Verpackungen V sind nun an der Greifereinrichtung 5 für deren jeweiligen Weitertransport ergriffen.

In Figur 2d werden von der ersten Greifereinheit 7 die gemäß Figur 2c an der Zuführeinheit 2 abgeholten Trays T in die Siegelstation 3 transportiert und die versiegelten Verpackungen V mittels der zweiten Greifereinheit 8 aus der Siegelstation 3 heraus an die Abführeinheit 4 übergeben. Auf der Zuführeinheit 2 werden bereits für einen neuen Transportzyklus Trays T bereitgestellt.

In Figur 2e wird gezeigt, dass sich die jeweiligen Schalengreiferpaare der ersten und der zweiten Greifereinheit 7, 8 von den in die Siegelstation 3 hineintransportierten Trays T sowie von den an die Abführeinheit 4 abgegebenen versiegelten Verpackungen V beabstandet haben. Die erste und die zweite Greifereinheit 7, 8 sind nun derart positioniert, dass sie entgegen der Produktionsrichtung P eine Rücklaufbewegung zu deren jeweiligen Ausgangspositionen A1, A2 durchführen können.

In Figur 2f ist die Greifereinrichtung 5 wieder wie in Figur 2a positioniert, so dass der Transportzyklus der Trays T sowie der Verpackungen V von Neuem beginnen kann.

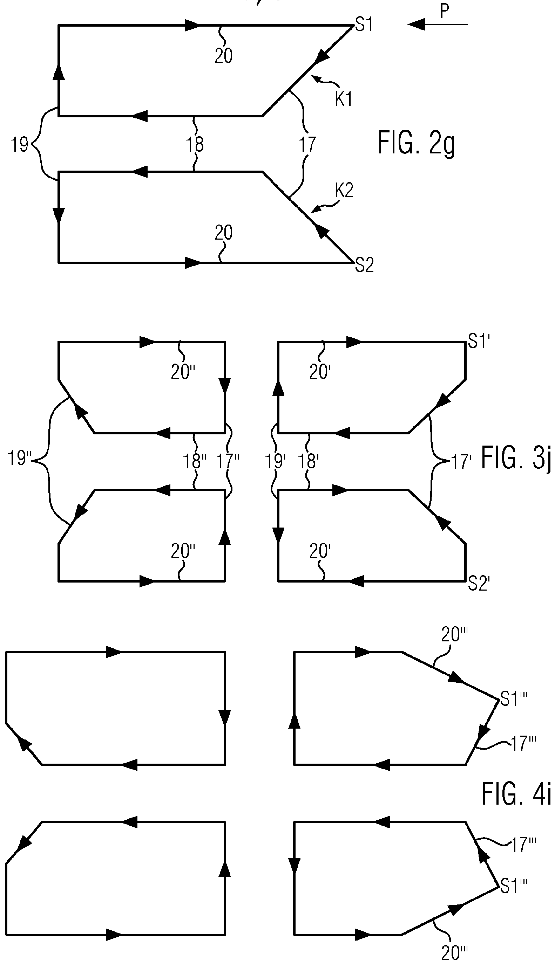

Figur 2g zeigt in schematischer Darstellung das Prinzip der in den Figuren 2a bis 2f durchgeführten Bewegungen der Greifereinrichtung 5. Im Wesentlichen bewegt sich die Greifereinrichtung 5 gemäß Figur 2g entlang geschlossener Bahnkurven K1, K2. Die jeweiligen Bahnkurven K1, K2 zeigen einen Schließabschnitt 17, einen Transferabschnitt 18, einen Freigabeabschnitt 19 sowie einen Rücklaufabschnitt 20. Die in der Figur 2a gezeigte Startausrichtung der Greifereinrichtung 5 ist in den Bahnkurven K1, K2 in Figur 2g an der Stelle S1, S2 dargestellt.

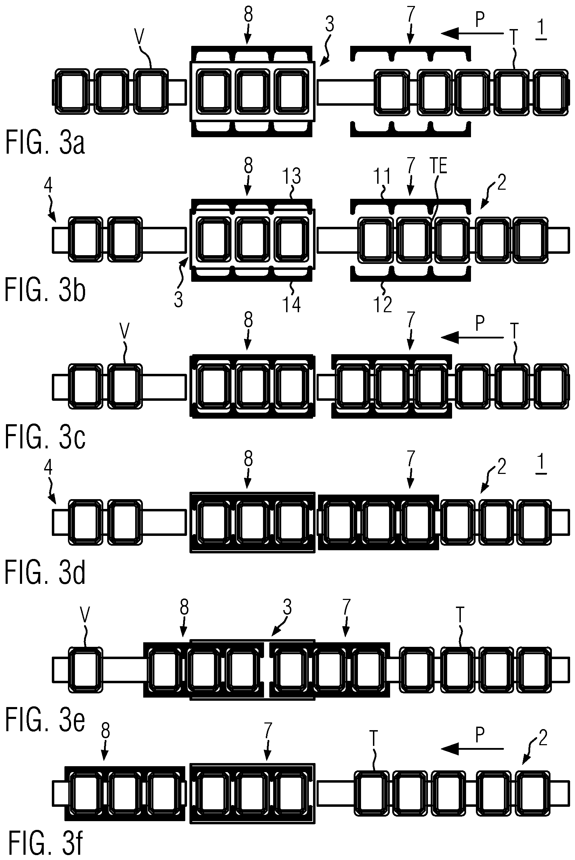

Die Figur 3a bis 3i zeigen eine Ausführungsform, bei welcher die Greifereinrichtung 5 mit einer separaten ersten und einer separaten zweiten Greifereinheit 7, 8 ausgestattet ist. Weiterhin gilt, dass die erste Greifereinheit 7 für den Transport von Trays T und die zweite Greifereinheit 8 für den Transport von versiegelten Verpackungen V ausgebildet ist.

In Figur 3a sind die erste und die zweite Greifereinheit 7, 8 in jeweiligen geöffneten Zuständen gezeigt.

In Figur 3b sind die jeweiligen Schalengreifer 11, 12 und 13, 14 der ersten und der zweiten Greifereinheit 7, 8 näher an die Trays T sowie an die Verpackungen V herangerückt. In der Produktionsrichtung P sind die jeweiligen Greiferfinger 15 der ersten Greifereinheit 7 nahe an jeweilige hintere Trayecken TE, unmittelbar neben einem vorderen Bereich der Positionsfenster F1 genähert.

Figur 3c zeigt eine Fortsetzung jeweiliger Schließbewegungen der ersten und der zweiten Greifereinheit 7, 8. Die an der ersten Greifereinheit 7 vorgesehenen Greiferfinger 15 tauchen nun in die jeweiligen Positionsfenster F1 fast vollständig ein. Die jeweiligen an der zweiten Greifereinheit 8 ausgebildeten Greiferfinger 16 tauchen in die jeweiligen entsprechenden Positionsfenster F2 zwischen innerhalb der Siegelstation 3 positionierten Verpackungen V ein.

Figur 3d zeigt die separat ausgebildeten Greifereinheiten 7, 8 jeweils in Schließposition.

Figur 3e zeigt im Anschluss an Figur 3d den Weitertransport der versiegelten Verpackungen V mittels der zweiten Greifereinheit 8 und die zeitgleich durchgeführte Zuführung neuer zu versiegelnder Trays T mittels der ersten Greifereinheit 7 in der Produktionsrichtung P.

In Figur 3f wird der Beginn eines Abgabevorgangs fertig hergestellter Verpackungen V an die Abführeinheit 4 mittels der zweiten Greifereinheit 8 sowie die Zuführung von Trays T mittels der ersten Greifereinheit 7 in die Siegelstation 3 gezeigt.

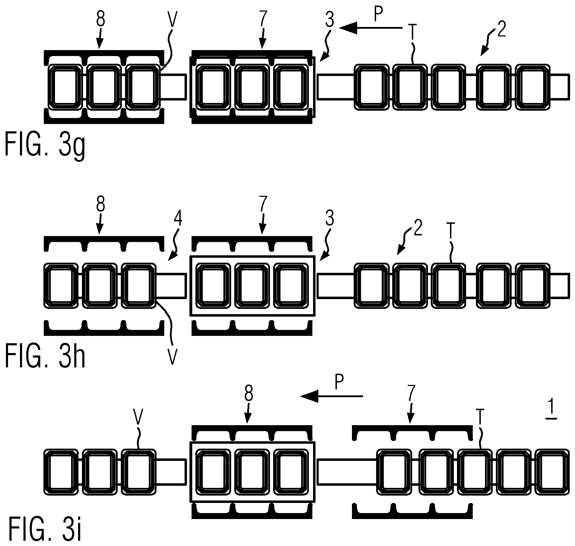

Gemäß den Figuren 3g und 3h werden die erste und die zweite Greifereinheit 7, 8 geöffnet, um eine jeweilige Rücklaufbewegung in die in Figur 3i gezeigte Positionierung der beiden Greifereinheiten 7, 8 zurückzukehren. In Figur 3i sind die jeweiligen Greifereinheiten 7, 8 wieder in ihrer Startposition gemäß Figur 3a angekommen, so dass der Tray- beziehungsweise Verpackungstransport von Neuem beginnen kann.

Figur 3j zeigt jeweilige schematische Bahnkurvenpaare für den Betrieb der ersten und zweiten Greifereinheit 7, 8 gemäß den Figuren 3a bis 3i. Relativ zur Produktionsrichtung P durchlaufen die jeweiligen Schalengreiferpaare der ersten und der zweiten Greifereinheit 7, 8 beginnend von den jeweiligen Startpositionen S1', S2' in Bezug auf Figur 3a die jeweiligen Schließ-, Transfer-, Freigabe- und Rücklaufabschnitte 17' bis 20'.

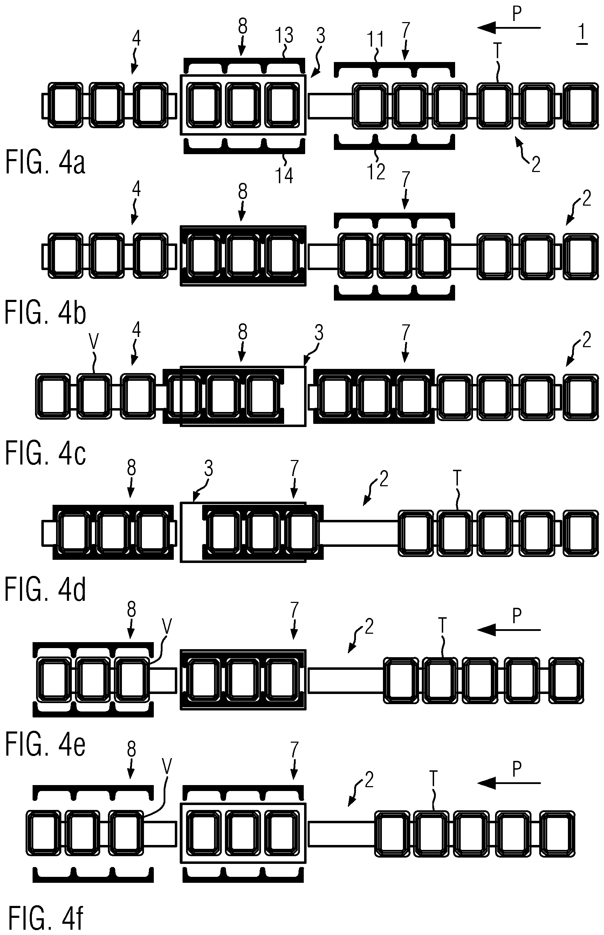

Die Figuren 4a bis 4h zeigen eine Greifereinrichtung 5 an der Schalenverschließmaschine 1 mit einer ersten und einer zweiten Greifereinheit 7, 8, die separat ausgebildet sind. Figur 4a zeigt, dass die jeweiligen Schalengreifer 11, 12 der ersten Greifereinheit 7 näher zusammengerückt als die jeweiligen Schalengreifer 13, 14 der zweiten Greifereinheit 8 positioniert sind.

Figur 4b zeigt, dass die zweite Greifereinheit 8 die innerhalb der Siegelstation 3 positionierten Verpackungen V ergreift, ehe sich die erste Greifereinheit 7 zum Ergreifen der Trays T an der Zuführeinheit 2 geschlossen hat.

In Figur 4c befindet sich nun auch die erste Greifereinheit 7 im geschlossenen Zustand, während die zweite Greifereinheit 8 bereits die Verpackungen V aus der Siegelstation 3 in Richtung der stromabwärts positionierten Abführeinheit 4 transportiert.

In Figur 4d ist die zweite Greifereinheit 8 übergabebereit, um die Verpackungen V an die Abführeinheit 4 abzugeben. An der ersten Greifereinheit 7 befinden sich daran aufgenommene Trays T auf dem Weg in die Siegelstation 3.

In Figur 4e führt die zweite Greifereinheit 8 bereits eine Freigabebewegung durch, um die Verpackungen V abzugeben. Die erste Greifereinheit 7 ist nun in Figur 4e derart an der Siegelstation 3 positioniert, dass sie die daran aufgenommenen Trays T für den anschließenden Schalenschließvorgang S abgeben kann.

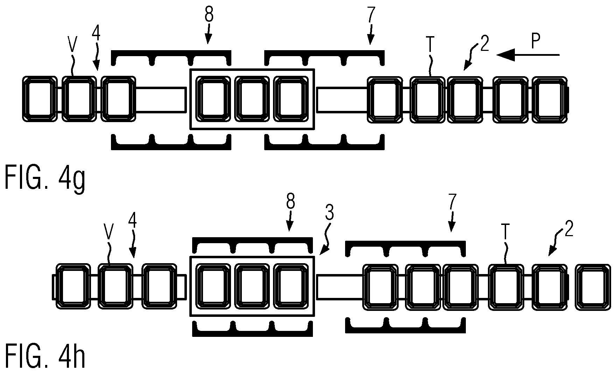

In Figur 4f sind sowohl die erste als auch die zweite Greifereinheit 7, 8 derart weit geöffnet positioniert, um eine anschließende Rücklaufbewegung gemäß Figur 4g in deren Startposition gemäß Figur 4h, die der Positionierung aus Figur 4a entspricht, durchzuführen.

Figur 4i zeigt schematische Streckenabläufe in Bezug auf die Produktionsrichtung P der jeweiligen Greifereinheiten 7, 8 gemäß den Figuren 4a bis 4h. In Bezug auf die erste Greifereinheit 7 der Figuren 4a bis 4h zeigen die daran jeweils vorgesehenen Schalengreifer 11, 12 im Vergleich zu den Bewegungsabschnitten gemäß Figur 3j abgekürzte Rücklaufabschnitte 20'", um den ersten und den zweiten Schalengreifer 11, 12 zur Startposition S1'", S2'" zurückzubringen.

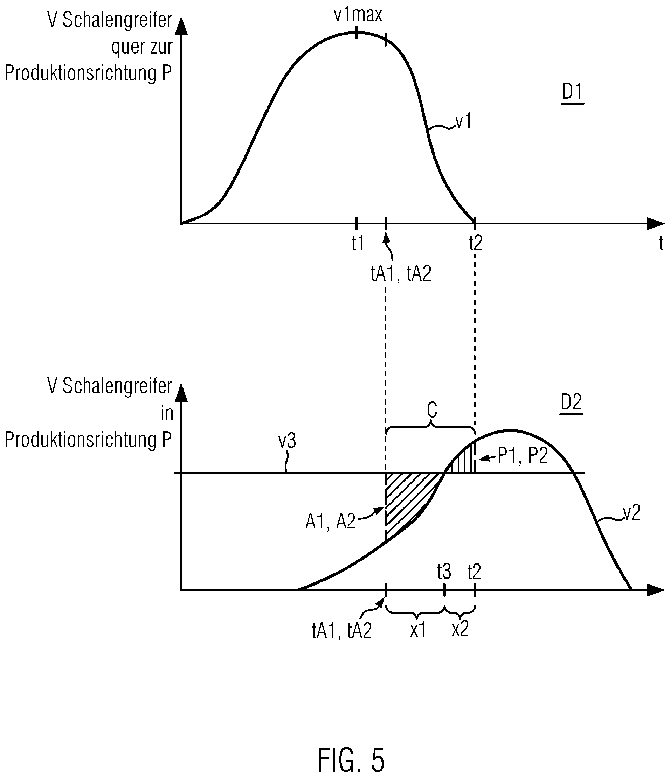

Figur 5 zeigt in schematisch beispielhafter Darstellung in einem oberen Diagramm D1 eine Geschwindigkeit v1 der ersten und/oder zweiten Greifereinheit 7, 8 der Greifereinrichtung 5 quer zur Produktionsrichtung P. In dem Diagramm D1 nimmt die Geschwindigkeit v1 kontinuierlich bis zu einer maximalen Geschwindigkeit v1max zum Zeitpunkt t1 zu und wird dann kontinuierlich bis zum Stillstand der Schalengreifer zum Zeitpunkt t2 abgebremst. Beim Zeitpunkt tA1, tA2 sind die jeweiligen Greiferpaare in ihrer Ausgangsposition A1, A2 für die Eintauchbewegung positioniert. Zu Beginn der Eintauchbewegung, d.h. während eines in Diagramm D2 gezeigten ersten Zeitintervalls X1, werden die jeweiligen Schalengreiferpaare zügiger quer zur Produktionsrichtung P geschlossen als zu einem zweiten Zeitintervall X2 (siehe Diagramm D2).

Figur 5 zeigt des Weiteren ein unteres Diagramm D2, in welchem sowohl eine Geschwindigkeit v2 der Schalengreifer der ersten und/oder zweiten Greifereinheit 7, 8 als auch eine Bandlaufgeschwindigkeit v3 des Transportbands 9 der Zuführeinheit 2 jeweils in der Produktionsrichtung P dargestellt sind.

In Figur 5 ist im unteren Diagramm D2 die Bandlaufgeschwindigkeit v3 konstant. Im Diagramm D2 findet während einem ersten Zeitintervall X1 und einem zweiten Zeitintervall X2 eine Schließbewegung C der jeweiligen Schalengreifer 11, 12 der ersten Greifereinheit 7 und/oder der jeweiligen Schalengreifer 13, 14 der zweiten Greifereinheit 8 statt. Die Schließbewegung C startet zu einem Zeitpunkt tA1, tA2, das heißt aus jeweiligen Ausgangspositionen A1, A2 der ersten und/oder zweiten Greifereinheiten 7, 8 heraus. Innerhalb des ersten Zeitintervalls X1 ist die Geschwindigkeit v2 der Schalengreifer 11, 12, 13, 14 relativ zu der Bandlaufgeschwindigkeit v3 des Transportbands 9 der Zuführeinheit 2 kleiner und ab einem Zeitpunkt t3 innerhalb des zweiten Zeitintervalls X2 größer als die Bandlaufgeschwindigkeit V3, sodass die jeweiligen Schalengreiferpaare in die jeweiligen zwischen den Trays T freigelassenen Positionsfenster F1, F2 zunächst während des Zeitintervalls X1 und anschließend während des zweiten Zeitintervalls X2 in die jeweiligen Positionsfenster F1, F2 eintauchen. Zum Zeitpunkt t2 haben die jeweiligen Schalengreifer der ersten und/oder zweiten Greifereinheit 7, 8 jeweilige Schließpositionen P1, P2 erreicht.

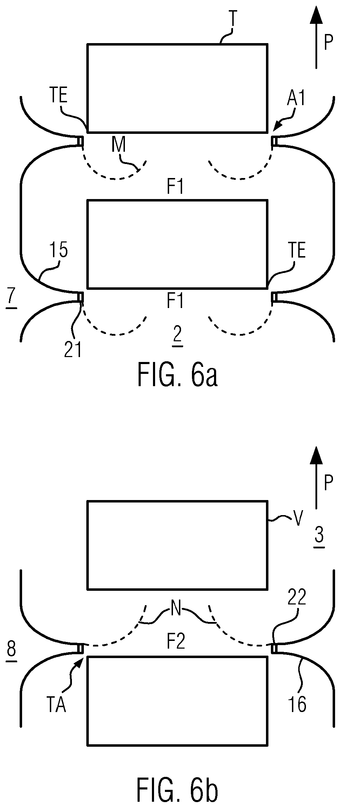

Die Geschwindigkeit v2 in der Produktionsrichtung P des ersten und des zweiten Schalengreifers 11, 12 und/oder des dritten und vierten Schalengreifers 13, 14 wird angesichts Figur 5 jeweils beim Durchführen der Schließbewegung C von der jeweiligen Ausgangsposition A1, A2 hin zu der jeweiligen Schließposition P1, P2 derart beschleunigt, dass die Geschwindigkeit v2 des ersten und des zweiten Schalengreifers 11, 12 und/oder des dritten und des vierten Schalengreifers 13, 14 in der Produktionsrichtung P relativ zu der Bandlaufgeschwindigkeit v3 der Zuführeinheit 2, die größer als Null ist, zu Beginn der Schließbewegung C, d.h. zu Beginn einer Eintauchbewegung der Greiferfinger 15 in die Positionsfenster F1, während des ersten Zeitintervalls X1 kleiner als die Bandlaufgeschwindigkeit v3 und während des daran anschließenden, zweiten Zeitintervalls X2 bis zum Erreichen der jeweiligen Schließpositionen P1, P2 größer als die Bandlaufgeschwindigkeit v3 ist, sodass die jeweiligen Greiferfinger 15 der ersten Greifereinheit 7 und die jeweiligen Greiferfinger 16 der zweiten Greifereinheit 8, wie in den Figuren 6a und 6b gezeigt, entlang entsprechender Bahnkurvenabschnitte M, N in die jeweiligen Positionsfenster F1, die zwischen den auf der Zuführeinheit 2 bereitgestellten Trays T vorliegen, und die jeweiligen Positionsfenster F2, die zwischen den innerhalb der Siegelstation 3 positionierten Verpackungen V vorliegen, eintauchen.

Figur 6a zeigt die erste Greifereinheit 7 relativ zu den entlang der Produktionsrichtung P auf dem Transportband 9 der Zuführeinheit 2 geförderten Trays T. Die beiden Bahnkurvenabschnitte M zeigen, dass die schneller bewegten Trays T zunächst die Greiferfinger 15 überholen, d.h. während des ersten Zeitintervalls X1 schneller auf dem Transportband 9 bewegt werden als die Schalengreifer 11, 12 in Produktionsrichtung P verfahren. Durch die gleichzeitige Querverstellung der Schalengreifer 11, 12 wird erreicht, dass Greiferspitzen 21 der Greiferfinger 15, die hinteren Trayecken TE zugeordnet sind, von dort aus entlang der Bahnkurvenabschnitte M in die Positionsfenster F1 gegenläufig zu diesen eintauchen. Ab einer gewissen Eintauchtiefe, d.h. zum Zeitpunkt t3 im Diagramm D2 der Figur 5, verfährt die erste Greifereinheit 7 schneller in Produktionsrichtung P als das Transportband 9, wodurch die Schalengreifer 11, 12 die Trays in der Produktionsrichtung P sanft mitnehmen können.

Figur 6b zeigt das Eintauchen der Greiferfinger 16 der zweiten Greifereinheit 8 in ein Positionsfenster F2, das zwischen den innerhalb der Siegelstation 3 positionierten Verpackungen V vorliegt. Im Gegensatz zur Figur 6a befinden sich zum Zeitpunkt tA1, tA2 (siehe Diagramm D2 aus Figur 5) Greiferspitzen 22 der Greiferfinger 16 der zweiten Greifereinheit 8 in der Produktionsrichtung P betrachtet an vorderen Trayecken TA einer Verpackung V positioniert und tauchen entlang der Bahnkurvenabschnitte N in Produktionsrichtung vorlaufend in das Positionsfenster F2 ein.

In Figur 6a wird die Aufnahme der Trays T an der Zuführeinheit 2 mittels der ersten Greifereinheit 7 schematisch dargestellt. Figur 6b zeigt in schematischer Darstellung die Aufnahme der innerhalb der Siegelstation 3 fertig hergestellten Verpackungen V mittels der zweiten Greifereinheit 8. Die in den Figuren 6a und 6b gezeigten schematischen Darstellungen können von aneinandergekoppelten Greifereinheiten 7, 8 oder separaten Greifereinheiten 7, 8 durchgeführt werden.

In Produktionsrichtung P beginnen die Greiferfinger 15 der ersten Greifereinheit 7 an eine hintere Trayecke TE des Trays T herangerückt mit der Schließbewegung C, d.h. in einem vorderen Bereich des Positionsfensters F1, mit dem Eintauchvorgang entlang der Bahnkurvenabschnitte M. In Figur 6b beginnen die Greiferfinger 16 der zweiten Greifereinheit 8 mit dem Eintauchvorgang in das Positionsfenster F2 an vorderen Trayecken TA der Verpackung V, d.h. in Produktionsrichtung P betrachtet in einem hinteren Bereich des Positionsfensters F2.

Die Erfindung ermöglicht eine genaue Aufnahme sowie sanfte Mitnahme von Trays T sowie Verpackungen V entlang des Produktionsverlaufs der Schalenverschließmaschine 1. Das erfindungsgemäße Prinzip kann an unterschiedlichen Typen von Traysealern zum Einsatz kommen. Je nach Traygeometrie sowie hinsichtlich gewünschter Durchsatzraten an der Schalenverschließmaschine 1 können die jeweiligen Greifereinheiten 7, 8 in deren Bewegungsablauf variabel einstellbar sein. Vorstellbar ist es auch, dass die Bandlaufgeschwindigkeit v3 des Transportbands 9 nicht konstant ist, sondern während des Produktionsbetriebs variiert, um beispielsweise auf dem Transportband 9 eine Puffer- und/oder Beschleunigungsfunktion zur Verfügung zu stellen. Bei einer sich ändernden Bandlaufgeschwindigkeit v3 könnte vorgesehen sein, dass die Geschwindigkeit v2 der jeweiligen Schalengreifer in der Produktionsrichtung P daran angepasst variierbar ist, um den Betrieb der Greifereinrichtung 5 an die Bereitstellung der Trays T optimal anzupassen.

## Patentansprüche

1. Schalenverschließmaschine (1), umfassend mindestens eine Zuführeinheit (2) zum Transport von Trays (T) in einer Produktionsrichtung, eine in der Produktionsrichtung (P) der Zuführeinheit (2) nachgelagerte Siegelstation (3) zum Herstellen von Verpackungen (V), mindestens eine der Siegelstation (3) in der Produktionsrichtung (P) nachgelagerte Abführeinheit (4) sowie eine Greifereinrichtung (5), die dazu ausgebildet ist, in einem Transportzyklus an der Zuführeinheit (2) bereitgestellte Trays (T) aufzunehmen und in die Siegelstation (3) für einen darin stattfindenden Schalenschließvorgang (S) zu transportieren sowie innerhalb der Siegelstation (3) hergestellte Verpackungen (V) aufzunehmen und zur Abführeinheit (4) zu transportieren, wobei die Greifereinrichtung (5) eine erste Greifereinheit (7) mit einem ersten und einem zweiten Schalengreifer (11, 12) aufweist, wobei der erste und der zweite Schalengreifer (11, 12) synchron zueinander entlang geschlossener Bahnkurven (K1, K2) periodisch verstellbar gelagert sind, und wobei der erste und der zweite Schalengreifer (11, 12) dazu ausgebildet sind, zur Aufnahme der mittels der Zuführeinheit (2) bereitgestellten Trays (T) eine Schließbewegung (C) durchzuführen, wobei der erste und der zweite Schalengreifer (11, 12) jeweils beim Durchführen der Schließbewegung (C) von einer jeweiligen Ausgangsposition (A1, A2) hin zu einer jeweiligen Schließposition (P1, P2) verstellbar sind, wobei der erste und der zweite Schalengreifer (11, 12) während der Schließbewegung (C) zumindest entlang eines vorbestimmten Bewegungsabschnitts bis zum Erreichen der Schließposition (P1, P2) mittels einer sowohl in der Produktionsrichtung (P) als auch quer zur Produktionsrichtung (P) überlagerten Bewegung aufeinander zu verstellbar sind, um die an der Zuführeinheit (2) bereitgestellten Trays (T) aufzunehmen, wobei die auf einem Transportband (9) der Zuführeinheit (2) bereitgestellten Trays (T) in der Produktionsrichtung (P) hintereinander in einem vorbestimmten Abstand zueinander, der ein jeweiliges Positionsfenster (F1) zwischen den Trays (T) definiert, angeordnet sind, **dadurch gekennzeichnet, dass** die erste Greifereinheit (7) dazu ausgebildet ist, dass eine Geschwindigkeit (v2) in der Produktionsrichtung (P) des ersten und des zweiten Schalengreifers (11, 12) jeweils beim Durchführen der Schließbewegung (C) von der jeweiligen Ausgangsposition (A1, A2) hin zu der jeweiligen Schließposition (C) derart beschleunigbar ist, dass die Geschwindigkeit (v2) des ersten und des zweiten Schalengreifers (11, 12) in der Produktionsrichtung (P) relativ zu einer Bandlaufgeschwindigkeit (v3) der Zuführeinheit (2), die größer als Null ist, während eines vorbestimmten ersten Zeitintervalls (X1) des vorbestimmten Bewegungsabschnitts kleiner als die Bandlaufgeschwindigkeit (v3) und während eines daran anschließenden, vorbestimmten zweiten Zeitintervalls (x3) bis zum Erreichen der Schließposition (P1, P2) größer als die Bandlaufgeschwindigkeit (v3) ist, sodass an dem ersten und dem zweiten Schalengreifer (11, 12) ausgebildete Greiferfinger (15) in die jeweiligen zwischen den bereitgestellten Trays (T) befindlichen Positionsfenster (F1) jeweils entlang einem vorbestimmten Bahnkurvenabschnitt (M) eintauchen.

2. Schalenverschließmaschine nach Anspruch 1, **dadurch gekennzeichnet, dass** beim Durchführen der Schließbewegung (C) zur Aufnahme der Trays (T) mittels der ersten Greifereinheit (7) eine Bewegung des ersten und des zweiten Schalengreifers (11, 12) in der Produktionsrichtung (P) als auch quer zur Produktionsrichtung (P) sowie eine Vorschubbewegung des Transportbands (9) der Zuführeinheit (2) kontinuierlich überlagert sind.

3. Schalenverschließmaschine nach Anspruch 1 oder 2, **dadurch gekennzeichnet, dass** die jeweiligen Greiferfinger (15) bei der Durchführung der Schließbewegung (C) zumindest während des ersten Zeitintervalls (X1) kontaktlos zu den Trays (T) entlang des jeweiligen Bahnkurvenabschnitts (M) innerhalb eines Bereichs der jeweiligen Positionsfenster (F1) verstellbar sind.

4. Schalenverschließmaschine nach einem der vorangehenden Ansprüche, **dadurch gekennzeichnet, dass** die jeweilige Ausgangsposition (A1, A2) des ersten und des zweiten Schalengreifers (11, 12) derart festgelegt ist, dass jeweilige Greiferspitzen (21) der Greiferfinger (15) an eine in der Produktionsrichtung (P) hintere Trayecke (TE) herangerückt sowie in der Produktionsrichtung (P) vorne am anschließenden Positionsfenster (F1) positioniert sind, ehe die Schließbewegung (C) beginnt.

5. Schalenverschließmaschine nach einem der vorangehenden Ansprüche, **dadurch gekennzeichnet, dass** die Greifereinrichtung (5) eine in der Produktionsrichtung (P) der ersten Greifereinheit (7) nachgeordnete zweite Greifereinheit (8) mit einem dritten und einem vierten Schalengreifer (13, 14) aufweist, wobei der dritte und der vierte Schalengreifer (13, 14) synchron zueinander entlang geschlossener Bahnkurven (K1, K2) periodisch verstellbar gelagert sind, wobei der dritte und der vierte Schalengreifer (13, 14) der zweiten Greifereinheit (8) dazu ausgebildet sind, zur Aufnahme der in der Siegelstation (3) hergestellten Verpackungen (V) eine Schließbewegung durchzuführen, wobei der dritte und der vierte Schalengreifer (13, 14) jeweils beim Durchführen der Schließbewegung von einer jeweiligen Ausgangsposition hin zu einer jeweiligen Schließposition verstellbar sind.

6. Schalenverschließmaschine nach Anspruch 5, **dadurch gekennzeichnet, dass** die erste und die zweite Greifereinheit (7, 8) aneinandergekoppelt ausgebildet sind, sodass die jeweiligen Schalengreifer (11, 12, 13, 14) auf gemeinsamen Bahnkurven (K1, K2) verstellbar sind, oder dass die erste und die zweite Greifereinheit (7, 8) als separate Greifereinheiten ausgebildet sind.

7. Schalenverschließmaschine nach einem der Ansprüche 5 oder 6, **dadurch gekennzeichnet, dass** der dritte und der vierte Schalengreifer (13, 14) der zweiten Greifereinheit (8) dazu ausgebildet sind, zur Freigabe hergestellter Verpackungen (V) an die Abführeinheit (4) eine Freigabebewegung durchzuführen, wobei der dritte und der vierte Schalengreifer (13, 14) zumindest entlang eines Bewegungsabschnitts während der Freigabebewegung mittels einer sowohl in der Produktionsrichtung (P) als auch entgegengesetzt quer zur Produktionsrichtung (P) überlagerten Bewegung verstellbar sind, um die Verpackungen (V) für einen Weitertransport an ein in der Produktionsrichtung (P) laufendes Transportband (10) der Abführeinheit (4) freizugeben.

8. Schalenverschließmaschine nach Anspruch 7, **dadurch gekennzeichnet, dass** beim Durchführen der Freigabebewegung der dritte und der vierte Schalengreifer (13, 14) der zweiten Greifereinheit (8) jeweils mit einer Bewegungskomponente in der Produktionsrichtung (P) verstellbar sind, die zu einer Bewegungskomponente der mittels der Abführeinheit in der Produktionsrichtung (P) abtransportierten Verpackungen (V) synchronisiert sind.

9. Schalenverschließmaschine nach einem der vorangehenden Ansprüche, **dadurch gekennzeichnet, dass** die erste Greifereinheit (7) dazu ausgebildet ist, eine Rücklaufbewegung zur jeweiligen Ausgangsposition (A1, A2) durchzuführen, wobei der jeweilige erste und der jeweilige zweite Schalengreifer während der Rücklaufbewegung zumindest entlang eines Bewegungsabschnitts bis zum Erreichen der Ausgangsposition (A1, A2) mittels einer sowohl entgegengesetzt zur Produktionsrichtung (P) als auch quer zur Produktionsrichtung (P) überlagerten Bewegung aufeinander zu verstellbar sind.

10. Verfahren zum Betreiben einer Greifereinrichtung (5) an einer Schalenverschließmaschine (1), wobei mittels einer ersten Greifereinheit (7) Trays (T) von einer Zuführeinheit (2) aufgenommen und für einen Schalenschließvorgang (S) in eine Siegelstation (3) transportiert werden, wobei zur Aufnahme der mittels der Zuführeinheit (2) bereitgestellten Trays (T) ein erster und ein zweiter Schalengreifer (11, 12) der ersten Greifereinheit (7) eine Schließbewegung (C) durchführen, anhand welcher die Schalen-greifer (11, 12) von einer jeweiligen Ausgangsposition (A1, A2) hin zu einer jeweiligen Schließposition (P1, P2) verstellt werden, wobei der erste und der zweite Schalengreifer (11, 12) während der Schließbewegung (C) zumindest entlang eines Bewegungsabschnitts bis zum Erreichen der Schließposition (P1, P2) mittels einer sowohl in der Produktionsrichtung (P) als auch quer zur Produktionsrichtung (P) überlagerten Bewegung aufeinander zu verstellt werden, um die an der Zuführeinheit (2) bereitgestellten Trays (T) aufzunehmen, wobei die Trays (T) auf einem Transportband (9) der Zuführeinheit (2) in der Produktionsrichtung (P) hintereinander in einem vorbestimmten Abstand zueinander, der ein jeweiliges Positionsfenster (F1) zwischen den Trays (T) definiert, bereitgestellt werden, **dadurch gekennzeichnet, dass** eine Geschwindigkeit (v2) in der Produktionsrichtung (P) des ersten und des zweiten Schalengreifers (11, 12) jeweils beim Durchführen der Schließbewegung (C) von der jeweiligen Ausgangsposition (A1, A2) hin zu der jeweiligen Schließposition (P1, P2) derart beschleunigt wird, dass die Geschwindigkeit (v2) des ersten und des zweiten Schalengreifers (11, 12) in der Produktionsrichtung (P) relativ zu einer Bandlaufgeschwindigkeit (v3) der Zuführeinheit (2), die größer als Null ist, während eines vorbestimmten ersten Zeitintervalls (X1) kleiner als die Bandlaufgeschwindigkeit (v3) und während eines daran anschließenden, vorbestimmten zweiten Zeitintervalls (X2) bis zum Erreichen der Schließposition (P1, P2) größer als die Bandlaufgeschwindigkeit (v3) ist, sodass an dem ersten und dem zweiten Schalengreifer (11, 12) ausgebildete Greiferfinger (15) in die jeweiligen zwischen den bereitgestellten Trays (T) befindlichen Positionsfenster (F1) jeweils entlang einem vorbestimmten Bahnkurvenabschnitt (M) eintauchen.

11. Verfahren nach Anspruch 10, **dadurch gekennzeichnet, dass** beim Durchführen der Schließbewegung (C) zur Aufnahme der Trays (T) mittels der ersten Greifereinheit (7) eine Bewegung des ersten und des zweiten Schalengreifers (11, 12) in der Produktionsrichtung (P) als auch quer zur Produktionsrichtung (P) sowie eine Vorschubbewegung des Transportbands (9) der Zuführeinheit (2) kontinuierlich überlagert wird.

12. Verfahren nach Anspruch 10 oder 11, **dadurch gekennzeichnet, dass** in der Produktionsrichtung (P) eine der ersten Greifereinheit (7) nachgeordnete zweite Greifereinheit (8) in der Siegelstation (3) hergestellte Verpackungen (V) aufnimmt und an eine in der Produktionsrichtung (P) der Siegelstation (3) nachgelagerte Abführeinheit (4) übergibt, wobei ein dritter und ein vierter Schalengreifer (13, 14) der zweiten Greifereinheit (8) eine Schließbewegung zur Aufnahme der in der Siegelstation (3) hergestellten Verpackungen (V) durchführen, und wobei der dritte und der vierte Schalengreifer (13, 14) jeweils beim Durchführen der Schließbewegung von einer jeweiligen Ausgangsposition hin zu einer jeweiligen Schließposition verstellt werden.

13. Verfahren nach Anspruch 12, **dadurch gekennzeichnet, dass** die erste und die zweite Greifereinheit (7, 8) aneinandergekoppelt die jeweiligen Schließbewegungen (C) durchführen, sodass der dritte und der vierte Schalengreifer (13, 14) während der Schließbewegung der zweiten Greifereinheit (8) zumindest entlang eines Bewegungsabschnitts bis zum Erreichen der Schließposition mittels einer sowohl in der Produktionsrichtung (P) als auch quer zur Produktionsrichtung (P) überlagerten Bewegung aufeinander zu verstellt werden, um die in der Siegelstation (3) bereitgestellten Verpackungen (V) aufzunehmen.

14. Verfahren nach Anspruch 12, **dadurch gekennzeichnet, dass** der dritte und der vierte Schalengreifer (13, 14) der zweiten Greifereinheit (8) für eine Freigabe hergestellter Verpackungen (V) an die Abführeinheit (4) eine Freigabebewegung durchführen, wobei der dritte und der vierte Schalengreifer (13, 14) zumindest entlang eines Bewegungsabschnitts während der Freigabebewegung mittels einer sowohl in der Produktionsrichtung (P) als auch entgegengesetzt quer zur Produktionsrichtung (P) überlagerten Bewegung verstellt werden, um die Verpackungen (V) für einen Weitertransport an ein in der Produktionsrichtung (P) laufendes Transportband (10) der Abführeinheit (4) zu übergeben.

15. Verfahren nach Anspruch 14, **dadurch gekennzeichnet, dass** beim Durchführen der Freigabebewegung der dritte und der vierte Schalengreifer (13, 14) der zweiten Greifereinheit (8) jeweils mit einer Bewegungskomponente in der Produktionsrichtung (P) verstellt werden, die zu einer Bewegungskomponente der mittels der Abführeinheit (4) in der Produktionsrichtung (P) abtransportierten Verpackungen (V) synchronisiert wird.

## Claims

1. Tray sealing machine (1), comprising at least one feed unit (2) for transporting trays (T) in a direction of production (p), a sealing station (3) in said direction of production (P) downstream of said feed unit (2) for the production of packagings (V), at least one discharge unit (4) in said direction of production (P) downstream of said sealing station (3) as well as a gripper device (5) which is configured to take up trays (T) provided in a transport cycle at said feed unit (2) and transport them into said sealing station (3) for a tray sealing process (S) taking place therein as well as to take up packagings (V) produced within said sealing station (3) and transport them to said discharge unit (4), where said gripper device (5) comprises a first gripper unit (7) with a first and a second tray gripper (11, 12), where said first and said second tray gripper (11, 12) are mounted synchronously to each other periodically adjustable along closed trajectories (K1, K2), and where said first and said second tray gripper (11, 12) are configured to perform a closing motion (C) to take up said trays (T) provided by said feed unit (2), where said first and said second tray gripper (11, 12) are each adjustable when performing said closing motion (C) from a respective initial position (A1, A2) toward a respective closing position (P1, P2), where said first and said second tray gripper (11, 12) are adjustable toward each other during said closing motion (C), at least along a predetermined motion section until said closing position (P1, P2) has been reached, by way of a motion superimposed both in said direction of production (P) and transverse to said direction of production (P) in order to take up said trays (T) provided at said feed unit (2), where said trays (T) provided on a conveyor belt (9) of said feed unit (2) are arranged consecutively in said direction of production (P) at a predetermined distance from each other which defines a respective position window (F1) between said trays (T), **characterized in that** said first gripper unit (7) is configured such that a speed (v2) of said first and said second tray gripper (11, 12) in said direction of production (P) when respectively performing said closing motion (C) from said respective initial position (A1, A2) to said respective closing position (C) can be accelerated such that said speed (v2) of said first and said second tray gripper (11, 12) in said direction of production (P) relative to a belt speed (v3) of said feed unit (2), which is greater than zero, during a predetermined first time interval (X1) of the predetermined motion section is slower than said belt speed (v3) and during a subsequent predetermined second time interval (x3) until the closing position (P1, P2) has been reached is greater than said belt speed (v3), so that said gripper fingers (15) formed on said first and said second tray gripper (11, 12) immerse into said respective position windows (F1) located between said trays (T) provided, each along a predetermined trajectory section (M).

2. Tray sealing machine according to claim 1, **characterized in that**, when performing said closing motion (C) for taking up said trays (T) by way of said first gripper unit (7), a motion of said first and said second tray gripper (11, 12) formed thereon in said direction of production (P) and transverse to said direction of production (P) as well as an advance motion of said conveyor belt (9) of said feed unit (2) are continuously superimposed.

3. Tray sealing machine according to claim 1 or 2, **characterized in that** said respective gripper fingers (15) are adjustable during the performance of said closing motion (C), at least during the first time interval (X1), in a noncontact manner toward said trays (T) along the respective trajectory section (M) within a region of said respective position windows (F1).

4. Tray sealing machine according to one of the preceding claims, **characterized in that** said respective initial position (A1, A2) of said first and said second tray gripper (11, 12) is defined such that respective gripper tips (21) of gripper fingers (15) are moved in said direction of production (P) to a rear tray corner (TE) and are positioned in said direction of production (P) at the front of the subsequent position window (F1) before said closing motion (C) begins.

5. Tray sealing machine according to one of the preceding claims, **characterized in that**, said gripper device (5) comprises a second gripper unit (8) in said direction of production (P) downstream of said first gripper unit (7) with a third and a fourth tray gripper (13, 14), where said third and said fourth tray gripper (13, 14) are mounted synchronously to each other periodically adjustable along closed trajectories (K1, K2), where said third and said fourth tray gripper (13, 14) of said second gripper unit (8) are configured to perform a closing motion for taking up said packagings (V) produced in said sealing station (3), where said third and said fourth tray gripper (13, 14) are each adjustable when performing the closing motion from a respective initial position toward a respective closing position.

6. Tray sealing machine according to claim 5, **characterized in that** said first and said second gripper unit (7, 8) are formed coupled to each other, so that said respective tray grippers (11, 12, 13, 14) are adjustable on common trajectories (K1, K2), or
that said first and said second gripper unit (7, 8) are formed as separate gripper units.

7. Tray sealing machine according to one the of the claims 5 or 6, **characterized in that** said third and said fourth tray gripper (13, 14) of said second gripper unit (8) are configured to perform a release motion for the release of produced packagings (V) to said discharge unit (4), where said third and said fourth tray gripper (13, 14) are adjustable, at least along a motion section during the release motion, by way of a motion superimposed both in said direction of production (P) as well as in the opposite direction transverse to said direction of production (P) in order to transfer said packagings (V) for onward transportation to a conveyor belt (10) of said discharge unit (4) running in said direction of production (P).

8. Tray sealing machine according to claim 7, **characterized in that**, when performing the release motion, said third and said fourth tray gripper (13, 14) of said second gripper unit (8) are each adjustable with a motion component in said direction of production (P) which is synchronized with a motion component of said packagings (V) transported away in said direction of production (P) by said discharge unit.

9. Tray sealing machine according to one of the preceding claims, **characterized in that** said first gripper unit (7) is configured to perform a return motion to said respective initial position (A1, A2), where said respective first and said respective second tray gripper are adjustable toward each other during the return motion, at least along a motion section until an initial position (A1, A2) has been reached, by way of a motion superimposed both against said direction of production (P) as well as transvers to said direction of production (P).

10. Method for operating a gripper device (5) on a tray sealing machine (1), where trays (T) from a feed unit (2) are taken up by a first gripper unit (7) and transported into a sealing station (3) for a tray sealing process (S), where, for taking up said trays (T) provided by said feed unit (2), a first and a second tray gripper (11, 12) of said first gripper unit (7) perform a closing motion (C) with which said tray grippers (11, 12) are adjusted from a respective initial position (A1, A2) toward a respective closing position (P1, P2), where said first and said second tray gripper (11, 12) during said closing motion (C) are adjusted toward each other, at least along a predetermined motion section until said closing position (P1, P2) has been reached, by way of a motion superimposed both in said direction of production (P) as well as transverse to said direction of production (P) in order to take up said trays (T) provided at said feed unit (2), where said trays (T) are provided on a conveyor belt (9) of said feed unit (2) consecutively in said direction of production (P) at a predetermined distance from each other which defines a respective position window (F1) between said trays (T), **characterized in that** a speed (v2) in said direction of production (P) of said first and said second tray gripper (11, 12) when respectively performing said closing motion (C), is accelerated from said respective initial position (A1, A2) toward said respective closing position (P1, P2) such that said speed (v2) of said first and said second tray gripper (11, 12) in said direction of production (P) relative to a belt speed (v3) of said feed unit (2), which is greater than zero, during a predetermined first time interval (X1) is slower than said belt speed (v3) and during a subsequent predetermined second time interval (X2) until said closing position (P1, P2) has been reached is greater than said belt speed (v3), so that said gripper fingers (15) formed on said first and said second tray gripper (11, 12) immerse into said respective position windows (F1) located between said trays (T) provided, each along a predetermined trajectory section (M).

11. Method according to claim 10, **characterized in that**, when performing said closing motion (C) for taking up said trays (T) by way of said first gripper unit (7), a motion of said first and said second tray gripper (11, 12) in said direction of production (P) and transverse to said direction of production (P) as well as an advance motion of said conveyor belt (9) of said feed unit (2) are continuously superimposed.

12. Method according to claim 10 or 11, **characterized in that** a second gripper unit (8) in said direction of production (P) downstream of said first gripper unit (7) preferably takes up packagings (V) produced in said sealing station (3) and transfers them to a discharge unit (4) that is in said direction of production (P) downstream of said sealing station (3), where a third and a fourth tray gripper (13, 14) of said second gripper unit (8) perform a closing motion for taking up said packagings (V) produced in said sealing station (3), and where said third and said fourth tray gripper (13, 14) when performing the closing motion are each adjusted from a respective initial position toward a respective closing position.

13. Method according to claim 12, **characterized in that** said first and said second gripper unit (7, 8) perform said respective closing motions (C) coupled to each other, so that said third and said fourth tray gripper (13, 14) are adjusted toward each other during the closing motion of said second gripper unit (8), at least along a motion section until the closing position has been reached, by way of a motion superimposed both in said direction of production (P) as well as transverse to said direction of production (P) in order to take up said packagings (V) provided in said sealing station (3).

14. Method according to claim 12, **characterized in that** said third and said fourth tray gripper (13, 14) of said second gripper unit (8) are configured to perform a release motion for the release of produced packagings (V) to said discharge unit (4), where said third and said fourth tray gripper (13, 14) are adjusted, at least along a motion section during the release motion, by way of a motion superimposed both in said direction of production (P) as well as in the opposite direction transverse to said direction of production (P) in order to transfer said packagings (V) for onward transportation to a conveyor belt (10) of said discharge unit (4) running in said direction of production (P).

15. Method according to claim 14, **characterized in that**, when performing the release motion, said third and said fourth tray gripper (13, 14) of said second gripper unit (8) are each adjusted with a motion component in said direction of production (P) which is synchronized with a motion component of said packagings (V) transported away in the direction of production (P) by said discharge unit (4).

## Revendications

1. Operculeuse de barquettes (1), comprenant au moins une unité d'alimentation (2) permettant de transporter des barquettes (T) dans une direction de production, un poste de scellage (3) situé en aval de l'unité d'alimentation (2) dans la direction de production (P) et permettant de produire des emballages (V), au moins une unité d'enlèvement (4) située en aval du poste de scellage (3) dans la direction de production (P), et un dispositif préhenseur (5) conçu pour accueillir des barquettes (T) fournies au niveau de l'unité d'alimentation (2) dans un cycle de transport et les transporter dans le poste de scellage (3) en vue d'une opération d'operculage de barquettes (S) qui s'y déroule et pour accueillir des emballages (V) produits à l'intérieur du poste de scellage (3) et les transporter vers l'unité d'enlèvement (4), dans laquelle le dispositif préhenseur (5) présente une première unité de préhension (7) avec des premier et deuxième préhenseurs de barquettes (11, 12), dans laquelle les premier et deuxième préhenseurs de barquettes (11, 12) sont montés de manière à pouvoir être déplacés périodiquement de manière synchrone l'un par rapport à l'autre le long de courbes de trajet (K1, K2) fermées, et dans laquelle les premier et deuxième préhenseurs de barquettes (11, 12) sont conçus pour mettre en oeuvre un mouvement de fermeture (C) afin d'accueillir les barquettes (T) fournies au moyen de l'unité d'alimentation (2), dans laquelle les premier et deuxième préhenseurs de barquettes (11, 12) peuvent respectivement être déplacés à partir d'une position initiale (A1, A2) respective jusqu'à une position de fermeture (P1, P2) respective lors de la mise en oeuvre du mouvement de fermeture (C), dans laquelle les premier et deuxième préhenseurs de barquettes (11, 12) peuvent être déplacés pendant le mouvement de fermeture (C) au moins le long d'une section de mouvement prédéterminée jusqu'à l'atteinte de la position de fermeture (P1, P2) au moyen d'un mouvement superposé à la fois dans la direction de production (P) et également transversalement par rapport à la direction de production (P) afin d'accueillir les barquettes (T) fournies au niveau de l'unité d'alimentation (2), dans laquelle les barquettes (T) fournies au niveau d'une bande transporteuse (9) de l'unité d'alimentation (2) sont agencées les unes derrière les autres dans la direction de production (P) à une distance prédéterminée les unes des autres qui définit une fenêtre de positionnement (F1) respective entre les barquettes (T), **caractérisée en ce que** la première unité de préhension (7) est conçue pour qu'une vitesse (v2) des premier et deuxième préhenseurs de barquettes (11, 12) dans la direction de production (P) puisse être accélérée à partir de la position initiale (A1, A2) respective jusqu'à la position de fermeture respective (C) respectivement lors de la mise en oeuvre du mouvement de fermeture (C) de telle manière que, par rapport à une vitesse de défilement de bande (v3), supérieure à zéro, de l'unité d'alimentation (2), la vitesse (v2) des premier et deuxième préhenseurs de barquettes (11, 12) dans la direction de production (P) est inférieure à la vitesse de défilement de bande (v3) pendant un premier intervalle de temps (X1) prédéterminé de la section de mouvement prédéterminée et est supérieure à la vitesse de défilement de bande (v3) pendant un second intervalle de temps (x3) prédéterminé lui succédant jusqu'à l'atteinte de la position de fermeture (P1, P2), de sorte que des doigts de préhension (15) réalisés au niveau des premier et deuxième préhenseurs de barquettes (11, 12) rentrent, respectivement le long d'une section de courbe de trajet (M) prédéterminée, dans les fenêtres de positionnement (F1) respectives situées entre les barquettes (T) fournies.

2. Operculeuse de barquettes selon la revendication 1, **caractérisée en ce que**, lors de la mise en œuvre du mouvement de fermeture (C) permettant d'accueillir les barquettes (T) au moyen de la première unité de préhension (7), un mouvement des premier et deuxième préhenseur de barquettes (11, 12) dans la direction de production (P) et également transversalement par rapport à la direction de production (P) et un mouvement d'avancée de la bande transporteuse (9) de l'unité d'alimentation (2) sont superposés en continu.

3. Operculeuse de barquettes selon la revendication 1 ou 2, **caractérisée en ce que** les doigts de préhension (15) respectifs peuvent être déplacés sans contact par rapport aux barquettes (T) le long de la section de courbe de trajet (M) respective à l'intérieur d'une plage des fenêtres de positionnement (F1) respectives lors de la mise en œuvre du mouvement de fermeture (C) au moins pendant le premier intervalle de temps (X1).

4. Operculeuse de barquettes selon l'une quelconque des revendications précédentes, **caractérisée en ce que** la position initiale (A1, A2) respective des premier et deuxième préhenseurs de barquettes (11, 12) est fixée de telle manière que les pointes de préhension (21) respectives des doigts de préhension (15) s'approchent d'un coin de barquette (TE) situé à l'arrière dans la direction de production (P) et sont positionnées à l'avant de la fenêtre de positionnement (F1) suivante dans la direction de production (P), avant que le mouvement de fermeture (C) ne débute.

5. Operculeuse de barquettes selon l'une quelconque des revendications précédentes, **caractérisée en ce que** le dispositif préhenseur (5) présente une seconde unité de préhension (8) agencée en aval de la première unité de préhension (7) dans la direction de production (P) et munie de troisième et quatrième préhenseurs de barquettes (13, 14), dans laquelle les troisième et quatrième préhenseurs de barquettes (13, 14) sont montés de manière à pouvoir être déplacés de manière synchrone et périodique l'un par rapport à l'autre le long de courbes de trajet (K1, K2) fermées, dans laquelle les troisième et quatrième préhenseur de barquettes (13, 14) de la seconde unité de préhension (8) sont conçus pour mettre en œuvre un mouvement de fermeture afin d'accueillir les emballages (V) produits dans le poste de scellage (3), dans laquelle les troisième et quatrième préhenseurs de barquettes (13, 14) peuvent respectivement être déplacés à partir d'une position initiale respective jusqu'à une position de fermeture respective lors de la mise en œuvre du mouvement de fermeture.

6. Operculeuse de barquettes selon la revendication 5, **caractérisée en ce que** les première et seconde unités de préhension (7, 8) sont conçues pour être couplées l'une à l'autre, de sorte que les préhenseurs de barquettes (11, 12, 13, 14) respectifs peuvent être déplacés sur des courbes de trajet (K1, K2) communes, ou **en ce que** les première et seconde unités de préhension (7, 8) sont conçues sous forme d'unités de préhension séparées.

7. Operculeuse de barquettes selon la revendication 5 ou 6, **caractérisée en ce que** les troisième et quatrième préhenseurs de barquettes (13, 14) de la seconde unité de préhension (8) sont conçus pour mettre en œuvre un mouvement de libération au niveau de l'unité d'enlèvement (4) afin de libérer les emballages (V) produits, dans laquelle les troisième et quatrième préhenseurs de barquettes (13, 14) peuvent être déplacés au moins le long d'une section de mouvement pendant le mouvement de libération au moyen d'un mouvement superposé à la fois dans la direction de production (P) et également en opposition transversalement par rapport à la direction de production (P), afin de libérer les emballages (V) en vue d'un transport ultérieur sur une bande transporteuse (10), défilant dans la direction de production (P), de l'unité d'enlèvement (4).

8. Operculeuse de barquettes selon la revendication 7, **caractérisée en ce que**, lors de la mise en œuvre du mouvement de libération, les troisième et quatrième préhenseurs de barquettes (13, 14) de la seconde unité de préhension (8) peuvent être déplacés dans la direction de production (P) respectivement avec une composante de mouvement en étant synchronisés par rapport à une composante de mouvement des emballages (V) emmenés dans la direction de production (P) au moyen de l'unité d'enlèvement.

9. Operculeuse de barquettes selon l'une quelconque des revendications précédentes, **caractérisée en ce que** la première unité de préhension (7) est conçue pour mettre en œuvre un mouvement de retour vers la position initiale (A1, A2) respective, dans laquelle les premier et deuxième préhenseurs de barquettes respectifs peuvent être déplacés l'un vers l'autre pendant le mouvement de retour au moins le long d'une section de mouvement jusqu'à l'atteinte de la position initiale (A1, A2) au moyen d'un mouvement superposé à la fois en opposition par rapport à la direction de production (P) et également transversalement par rapport à la direction de production (P).

10. Procédé de fonctionnement d'un dispositif préhenseur (5) au niveau d'une operculeuse de barquettes (1), dans lequel des barquettes (T) en provenance d'une unité d'alimentation (2) sont accueillies au moyen d'une première unité de préhension (7) et sont transportées dans un poste de scellage (3) en vue d'une opération d'operculage de barquettes (S), dans lequel, afin d'accueillir les barquettes (T) fournies au moyen de l'unité d'alimentation (2), des premier et deuxième préhenseurs de barquettes (11, 12) de la première unité de préhension (7) mettent en œuvre un mouvement de fermeture (C) au moyen duquel les préhenseurs de barquettes (11, 12) sont déplacés à partir d'une position initiale (A1, A2) respective jusqu'à une position de fermeture (P1, P2) respective, dans lequel les premier et deuxième préhenseurs de barquettes (11, 12) sont déplacés l'un vers l'autre pendant le mouvement de fermeture (C) au moins le long d'une section de mouvement jusqu'à l'atteinte de la position de fermeture (P1, P2) au moyen d'un mouvement superposé à la fois dans la direction de production (P) et également transversalement par rapport à la direction de production (P) afin d'accueillir les barquettes (T) fournies au niveau de l'unité d'alimentation (2), dans lequel les barquettes (T) sont fournies sur une bande transporteuse (9) de l'unité d'alimentation (2) dans la direction de production (P) les unes derrière les autres à une distance prédéterminée les unes des autres qui définit une fenêtre de positionnement (F1) respective entre les barquettes (T), **caractérisé en ce qu'**une vitesse (v2) dans la direction de production (P) des premier et deuxième préhenseurs de barquettes (11, 12) est accélérée respectivement lors de la mise en œuvre du mouvement de fermeture (C) à partir de la position initiale (A1, A2) respective jusqu'à la position de fermeture (P1, P2) respective, de telle manière que, par rapport à une vitesse de défilement de bande (v3), supérieure à zéro, de l'unité d'alimentation (2), la vitesse (v2) des premier et deuxième préhenseurs de barquettes (11, 12) dans la direction de production (P) est inférieure à la vitesse de défilement de bande (v3) pendant un premier intervalle de temps (X1) prédéterminé et est supérieure à la vitesse de défilement de bande (v3) pendant un second intervalle de temps (X2) prédéterminé lui succédant jusqu'à l'atteinte de la position de fermeture (P1, P2), de sorte que des doigts de préhension (15) réalisés au niveau des premier et deuxième préhenseurs de barquettes (11, 12) rentrent, respectivement le long d'une section de courbe de trajet (M) prédéterminée, dans les fenêtres de positionnement (F1) respectives situées entre les barquettes (T) fournies.

11. Procédé selon la revendication 10, **caractérisé en ce que**, lors de la mise en œuvre du mouvement de fermeture (C) permettant d'accueillir les barquettes (T) au moyen de la première unité de préhension (7), un mouvement des premier et deuxième préhenseurs de barquettes (11, 12) dans la direction de production (P) et également transversalement par rapport à la direction de production (P) et un mouvement d'avancée de la bande transporteuse (9) de l'unité d'alimentation (2) sont superposés en continu.

12. Procédé selon la revendication 10 ou 11, **caractérisé en ce que**, dans la direction de production (P), une seconde unité de préhension (8) agencée en aval de la première unité de préhension (7) accueille des emballages (V) produits dans le poste de scellage (3) et les transfère à une unité d'enlèvement (4) agencée en aval du poste de scellage (3) dans la direction de production (P), dans lequel des troisième et quatrième préhenseurs de barquettes (13, 14) de la seconde unité de préhension (8) mettent en œuvre un mouvement de fermeture permettant d'accueillir les emballages (V) produits dans le poste de scellage (3), et dans lequel les troisième et quatrième préhenseurs de barquettes (13, 14) sont respectivement déplacés à partir d'une position initiale respective jusqu'à une position de fermeture respective lors de la mise en œuvre du mouvement de fermeture.

13. Procédé selon la revendication 12, **caractérisé en ce que** les première et seconde unités de préhension (7, 8) mettent en œuvre les mouvements de fermeture (C) respectifs en étant couplées l'une à l'autre, de sorte que, pendant le mouvement de fermeture de la seconde unité de préhension (8), les troisième et quatrième préhenseurs de barquettes (13, 14) sont déplacés l'un vers l'autre au moins le long d'une section de mouvement jusqu'à l'atteinte de la position de fermeture au moyen d'un mouvement superposé à la fois dans la direction de production (P) et également transversalement par rapport à la direction de production (P) afin d'accueillir les emballages (V) fournis dans le poste de scellage (3).

14. Procédé selon la revendication 12, **caractérisé en ce que** les troisième et quatrième préhenseurs de barquettes (13, 14) de la seconde unité de préhension (8) mettent en œuvre un mouvement de libération au niveau de l'unité d'enlèvement (4) afin de libérer les emballages (V) produits, dans lequel les troisième et quatrième préhenseurs de barquettes (13, 14) sont déplacés au moins le long d'une section de mouvement pendant le mouvement de libération au moyen d'un mouvement superposé à la fois dans la direction de production (P) et également en opposition transversalement par rapport à la direction de production (P), afin de transférer les emballages (V) en vue d'un transport ultérieur sur une bande transporteuse (10), défilant dans la direction de production (P), de l'unité d'enlèvement (4).

15. Procédé selon la revendication 14, **caractérisé en ce que**, lors de la mise en œuvre du mouvement de libération, les troisième et quatrième préhenseurs de barquettes (13, 14) de la seconde unité de préhension (8) sont déplacés dans la direction de production (P) respectivement avec une composante de mouvement en étant synchronisés par rapport à une composante de mouvement des emballages (V) emmenés dans la direction de production (P) au moyen de l'unité d'enlèvement (4).
